# EUROPÄISCHE PATENTSCHRIFT

(11) **EP 1 591 489 B1**
(45) Veröffentlichungstag und Bekanntmachung des Hinweises auf die Patenterteilung: **09.06.2010**
(21) Anmeldenummer: 05007908.6
(22) Anmeldetag: 12.04.2005
(51) Int. Cl.: C09B 67/00, C09B 45/14, G02B 5/20, G03F 7/00, C09D 11/00

(54) **Organische Pigmentpräparationen**
Pigment preparations
Préparations pigmentaires

(30) Priorität: 20.04.2004 DE 102004019020
(43) Veröffentlichungstag der Anmeldung: 02.11.2005
(73) Patentinhaber: LANXESS Deutschland GmbH, 51369 Leverkusen (DE)
(72) Erfinder: Feldhues, Ulrich, Dr., 51465 Bergisch Gladbach (DE); Linke, Frank, 51069 Köln (DE); Göbel, Ronald, 51371 Leverkusen (DE)

(56) Entgegenhaltungen:
- EP-A- 0 994 162
- EP-A- 0 994 163
- EP-A- 1 146 087
- EP-A- 1 174 473
- FR-A- 2 121 048
- US-A- 4 622 391
- US-A1- 2003 187 108

## Beschreibung

Die Erfindung betrifft Metallkomplexe enthaltende Pigmentpräparationen, Verfahren zu ihrer Herstellung, ihre Verwendung, insbesondere zur Herstellung von Farbfiltern, sowie die Farbfilter selbst.

Farbfilter finden heute vornehmlich Anwendung in Flüssigkristallanzeigen, -bildschirmen, Farbauflösungsgeräten und Sensoren. Ein bekanntes Beispiel sind die Flachbildschirme bei Personalcomputern. Es gibt verschiedene Methoden zur Herstellung der Farbfilter, die sich sowohl in der Auftragung der Farben als auch der Erzeugung der Farbelementmuster der Basisfarben rot, grün und blau neben schwarz unterscheiden. Die Applikation bzw. Auftragung der Farben kann z.B. durch Einfärben einer Trägerschicht (z.B. Gelatine) mittels löslichen Farbstoffen oder Pigmenten ("Dye Method", "Dye Dispersion Method"), Siebdruck, Offsetdruck oder Tintenstrahldruck von Pigmentpasten, -präparationen oder -tinten, Elektrodeposition von Photolacken auf Basis von Farbstoffen oder Pigmenten sowie insbesondere mittels der Pigment-Dispersionsmethode, bei der Pigmente verwendet werden, die entweder in einem Polyimidharz ("nicht-photosensitive Polyimidmethode") oder in einem Photolack ("photosensitive Acrylmethode") dispergiert sind, erfolgen. Verbunden mit den genannten Verfahren kommt sowohl der drucktechnisch direkten Erzeugung der Farbelementmuster als auch der indirekten, photolithographischen Erzeugung Bedeutung zu letztere insbesondere bei der o.g. Pigmentdispersionsmethode. Die Technik der Pigment-Dispersionsmethode in Form der "nicht-photosensitiven Polyimidmethode" ist beispielsweise in JP-A-11-217514 (1998) offenbart.

Bei der Pigment-Dispersionsmethode nach dem Photolackverfahren liegen die farbgebenden Pigmente in einem UV-härtbaren Photolack feinverteilt (dispergiert) vor. Der Photolack besteht dabei neben dem Pigment im Allgemeinen aus den Komponenten Bindemittelharz, polymerisierbares Monomer, Photoinitiator sowie gegebenenfalls einem Lösungsmittel. Die Herstellung erfolgt z.B. derart, dass zunächst das Pigment in Form eines Konzentrates Lösungsmittel und gegebenenfalls Bindemittelharz feinteilig dispergiert wird und unmittelbar vor der Applikation zusammen mit dem Monomer und dem Photoinitiator sowie gegebenenfalls weiteren Komponenten eingestellt wird. Der pigmentierte Fotolack wird auf das Substrat, z.B. Glass, gleichmäßig aufgetragen, z.B. mittels dem sogenannten "spin coating"- Verfahren, vorgetrocknet, mittels einer Fotomaske UV belichtet, mittels einer in der Regel anorganisch alkalischen Lösung zu den gewünschten Farbelementmustern entwickelt, die Beschichtung gereinigt und gegebenenfalls nachgehärtet. Dieser Prozess wird für jede Farbe wiederholt, in der Regel also 3 mal für eine Trichromie z.B. in den Farben rot, grün und blau.

Die Vorteile bei der Verwendung von Pigmenten in Verbindung mit der Pigment-Dispersionsmethode liegen in der verbesserten Licht-, Feuchtigkeits- und Temperaturbeständigkeit der Farbfilter im Vergleich zu farbstoff-basierenden Beschichtungssystemen. Demgegenüber sind die Transparenz und Farbreinheit der Beschichtungen auf Basis von Pigmenten, unabhängig vom Beschichtungsverfahren, noch nicht zufriedenstellend. Insbesondere wenn verschiedene Pigmente in Mischung zur Nuancierung auf die gewünschten Farbortwerte im Fotolack eingearbeitet werden, kommt es zu unerwünschten Brillianz- und Transparenzverlusten, so dass als Folge die Anzeigen bzw. Bildschirme (LCD) mit einem erhöhten Energieaufwand betrieben werden müssen.

Aus EP-A-947563 sind spezielle Azopyrazolone für den Einsatz in Farbfiltern beschrieben. Einzelne Pigmente, die nach dem Stand der Technik in Farbfiltern zum Einsatz kommen, sind z.B. in JP-A-11-217514, JP-A-11-209631: spezielles Pigment Colour Index Pigment Yellow 150 und JP-A-11-209632 offenbart. Diese sind jedoch im Hinblick auf die beschriebenen Anforderungen noch zu verbessern.

In EP-A-1 146 087 wird als Gelbkomponente der grünen Farbe ein Metallazopigment beschrieben.

Bevorzugt setzt sich die gelbgrüne Farbkomponente aus dem Cl Pigment Green 36 und einem gelben Metallazopigment zusammen. Zur besseren Kombinierbarkeit mit den übrigen Farbtönen ist eine möglichst chromatische und transparente gelbgrüne Farbkomponente vorteilhaft. Dafür muss das gelbe Pigment möglichst chromatisch und transparent sein. Das gelbe Pigment sollte gleichzeitig nicht selber grünstichig sein, um beispielsweise das als Einzelkomponente viel zu grüne Pigment Green 36 besser abmischen zu können. Eine kleine Verschiebung im Farbton des gelben Pigmentes Richtung ,Rot' bzw. eine Erhöhung des Chroma bedeuten eine dramatische Verbesserung dieses gelben Pigmentes als Nuancierkomponente für z.B. ein Pigment Green 36. Im optimalen Fall sollte zudem die Addition der jeweiligen drei Farbfilter (Rot, Grün, Blau) eine vollständige Lichtabsorption ergeben.

Es wurde nun gefunden, dass man die beschriebenen Eigenschaften des grünen Farbtons deutlich verbessern kann, wenn als Gelbkomponente die nachfolgende Pigmentpräparation eingesetzt wird.

Die Erfindung betrifft daher eine Pigmentpräparation enthaltend
a) wenigstens einen Metallkomplex einer Azo-Verbindung, die in Form ihrer tautomeren Strukturen der Formel (I) entspricht 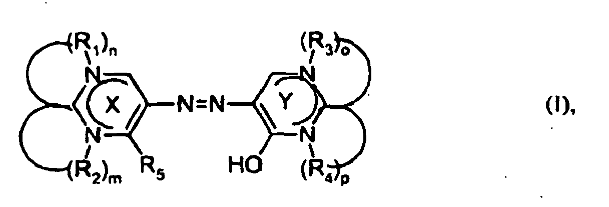 worin die mit
   - X und Y: bezeichneten Ringe unabhängig voneinander je einen oder zwei Substituenten aus der Reihe =O, =S, =NR₇, -NR₆R₇, -OR₆, -SR₆, -COOR₆, -CN, -CONR₆R₇, -SO₂R₈, 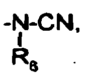 Alkyl, Cycloalkyl, Aryl und Aralkyl tragen können, wobei die Summe der endo- und exocyclischen Doppelbindungen für jeden der Ringe X und Y drei ist,
   R₆ für Wasserstoff, Alkyl, Cycloalkyl, Aryl oder Aralkyl und
   R₇ für Wasserstoff, Cyan, Alkyl, Cycloalkyl, Aryl, Aralkyl oder Acyl stehen und
   R₈ Alkyl, Cycloalkyl, Aryl oder Aralkyl bezeichnet,
   - R₁, R₂, R₃, R₄: unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,
   - R₅: -OH, -NR₆R₇, Alkyl, Cycloalkyl, Aryl oder Aralkyl bedeutet, wobei die für R₁ bis R₈ genannten CH-Bindungen enthaltenden Substituenten ihrerseits substituiert sein können und m, n, o, p, l oder für den Fall, dass von den Ring-Stickstoffatomen Doppelbindungen ausgehen, wie in Formel (I) durch die punktierten Linien angedeutet wird, auch Null bedeuten können,
   und der wenigstens eine andere Verbindung eingelagert enthält, wobei das Metall des Metallkomplexes der Komponente a) Ni ist,
b) gegebenenfalls eine Eisenverbindung, die von der Komponente a) verschieden ist und deren Eisengehalt weniger als 30 ppm, vorzugsweise weniger als 20 ppm, insbesondere weniger als 10 ppm, besonders bevorzugt 1 bis 5 ppm, bezogen auf die Komponente a) und
c) wenigstens eine Metallverbindung, deren Metall jeweils von dem der Metallverbindungen der Komponenten a) und b) verschieden ist und deren Metallgehalt 10 bis 10.000 ppm, bezogen auf die Komponente a) beträgt, wobei das Metall ausgewählt ist aus der Gruppe der Alkalimetalle wie Li, Na und K, der Erdalkalimetalle wie Mg, Ca und Ba, der Lanthanoiden wie La, Ce, Pr und Nd sowie Al, Sc, Ti, V, Cr, Mn, Co, Cu und Zn.

Bevorzugte organische Metallkomplexe der Formel (I) sind dabei solche von Azo-Verbindungen, die in Form ihrer freien Säure einer der tautomeren Formen der Formel (I) entsprechen, bei denen der mit X gekennzeichnete Ring für einen Ring der Formeln 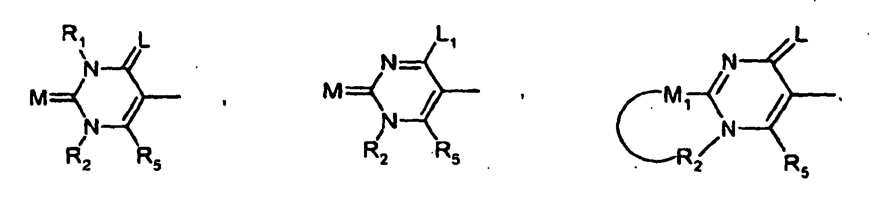 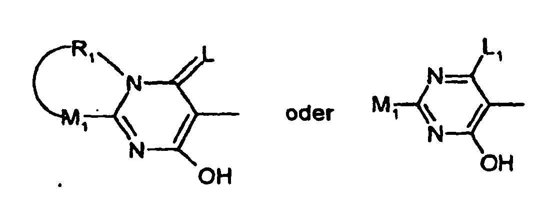 steht,
in denen
- L und M: unabhängig voneinander für =O, =S oder =NR₆ stehen
- L₁: Wasserstoff, -OR₆, -SR₆, -NR₆R₇, -COOR₆, -CONR₆R₇, -CN, Alkyl, Cycloalkyl, Aryl oder Aralkyl und

- M₁: -OR₆, -SR₆, -NR₆R₇, -COOR₆, -CONR₆R₇, -CN, -SO₂R₈, 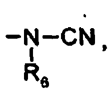 Alkyl, Cycloalkyl, Aryl oder Aralkyl bezeichnen, wobei die Substituenten M₁ und R₁ oder M₁ und R₂ einen 5-oder 6-gliedrigen Ring ausbilden können.

Besonders bevorzugte organische Metallkomplexe sind dabei solche von Azo-Verbindungen, die in Form ihrer freien Säure einer ihrer tautomeren Strukturen der Formeln (II) oder (III) entsprechen 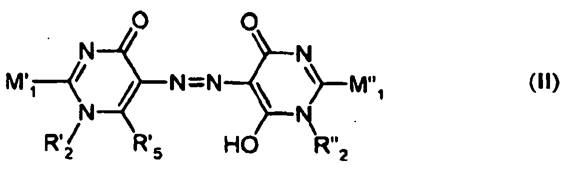 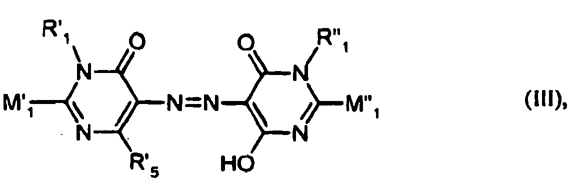 in denen
- R'₅: -OH oder -NH₂ bezeichnet,
- R'₁, R"₁, R'₂ und R"₂: jeweils für Wasserstoff steht und
- M'₁ und M"₁: unabhängig voneinander für Wasserstoff, -OH, -NH₂, -NHCN, Arylamino oder Acylamino stehen.

Ganz besonders bevorzugte Metallkomplexe sind dabei solche von Azo-Verbindungen der Formel (I), die in Form ihrer freien Säure einer der tautomeren Strukturen der Formel (IV) entsprechen 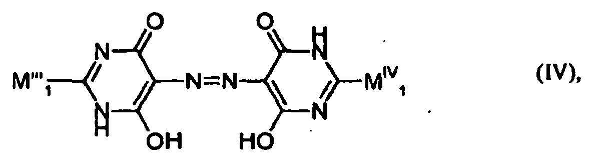 in denen
- M'''₁ und M^{IV}₁: unabhängig voneinander OH und NHCN bedeuten.

Bevorzugt vor allem sind dabei organische Metallkomplexe solcher Azo-Verbindungen der Formel (I), die in Form ihrer freien Säure einer der tautomeren Strukturen der Formel (V) entsprechen

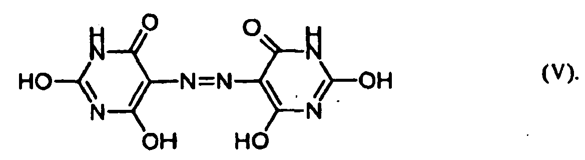

In den vorstehenden Formeln haben die Substituenten vorzugsweise die folgenden Bedeutungen:

Substituenten in der Bedeutung von Alkyl bezeichnen vorzugsweise C₁-C₆-Alkyl, das beispielsweise durch Halogen, wie Chlor, Brom oder Fluor, -OH, -CN, -NH₂ oder C₁-C₆-Alkoxy substituiert sein kann.

Substituenten in der Bedeutung von Cycloalkyl bezeichnen vorzugsweise C₃-C₇-Cycloalkyl, insbesondere C₅-C₆-Cycloalkyl, das beispielsweise durch C₁-C₆-Alkyl, C₁-C₆-Alkoxy, Halogen wie Cl, Br oder F, C₁-C₆-Alkoxy, -OH, -CN sowie NH₂ substituiert sein kann.

Substituenten in der Bedeutung von Aryl bezeichnen vorzugsweise Phenyl oder Naphthyl, die beispielsweise durch Halogen wie F, Cl oder Br, -OH, C₁-C₆-Alkyl, C₁-C₆-Alkoxy, -NH₂, -NO₂ sowie -CN sustituiert sein können.

Substituenten in der Bedeutung von Aralkyl bezeichnen bevorzugt Phenyl- oder Naphthyl-C₁-C₄-alkyl, die in den aromatischen Resten beispielsweise durch Halogen wie F, Cl oder Br, -OH, C₁-C₆-Alkyl, C₁-C₆-Alkoxy, -NH₂, -NO₂ sowie -CN substituiert sein können.

Substituenten in der Bedeutung von Acyl bezeichnen vorzugsweise (C₁-C₆-Alkyl)-carbonyl, Phenylcarbonyl, C₁-C₆-Alkylsulfonyl, Phenylsulfonyl, gegebenenfalls durch C₁-C₆-Alkyl, Phenyl und Naphthyl substituiertes Carbamoyl, gegebenenfalls durch C₁-C₆-Alkyl, Phenyl und Naphthyl substituiertes Sulfamoyl oder gegebenenfalls durch C₁-C₆-Alkyl, Phenyl und Naphthyl substituiertes Guanyl, wobei die genannten Alkylreste beispielsweise durch Halogen wie Cl, Br oder F, -OH, -CN, -NH₂ oder C₁-C₆-Alkoxy substituiert sein können und die genannten Phenyl- und Naphthylreste beispielsweise durch Halogen wie F, Cl oder Br, -OH, C₁-C₆-Alkyl, C₁-C₆-Alkoxy, -NH₂, -NO₂ und -CN substituiert sein können.

Für den Fall, dass M₁R₁ oder M₁R₂ oder M₁R₂ bzw. R_{1,} R₂, R₃, R₄, wie in Formel (I) durch die unterbrochenen Linien angedeutet wird, 5- oder 6-gliedrige Ringe ausbilden, handelt es sich vorzugsweise um Triazol-, Imidazol- oder Benzimidazol-, Pyrimidin- oder Chinazolin-Ringsysteme.

Als Metallkomplexe, worunter auch -Salze verstanden werden, der Formeln (I) bis (V) kommen vorzugsweise die Salze und Komplexe der Mono-, Di-, Tri- und Tetraanionen mit dem Metall Ni, in Betracht.

Besonders bevorzugt handelt es sich bei den Verbindungen der Formel (I) um den Azobarbitursäure-Nickel-1:1-Komplex der Formel (VI) oder eine seiner tautomeren Formen 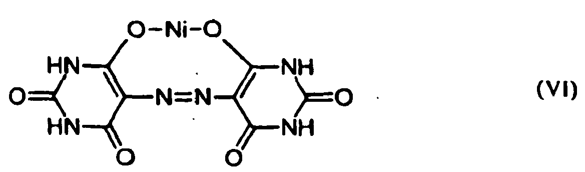 der mindestens eine andere Verbindung eingeschlossen enthält.

Eingeschlossen sein können sowohl organische als auch anorganische Verbindungen.

Verbindungen, die eingeschlossen sein können, entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind wiederum solche bevorzugt, die einen Siedepunkt von 100°C oder darüber, bevorzugt von größer gleich 150°C bei 1 bar, aufweisen. Geeignete Verbindungen sind vorzugsweise acyclische und cyclische organische Verbindungen, z.B. aliphatische und aromatische Kohlenwasserstoffe, die substituiert sein können, z.B. durch OH, COOH, NH₂, substituiertes NH₂, CONH₂, substituiertes CONH₂, SO₂NH₂, substituiertes SO₂NH₂, SO₃H, Halogen, NO₂, CN, -SO₂-Alkyl, -SO₂-Aryl, -O-Alkyl, -O-Aryl, -O-Acyl.

Carbonsäure- und Sulfonsäureamide sind eine bevorzugte Gruppe von einzuschließenden Verbindungen, insbesondere geeignet sind auch Harnstoff und substituierte Harnstoffe wie Phenylharnstoff, Dodecylharnstoff und andere sowie deren Polykondensate mit Aldehyden, insbesondere Formaldehyd; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Ebenfalls für eine Einlagerung geeignet sind Polymere, vorzugsweise wasserlösliche Polymere, z.B. Ethylen-propylenoxid-Blockpolymere, vorzugsweise mit einem Mₙ größer gleich 1.000, insbesondere von 1.000 bis 10.000 g/mol, Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.

Besonders bevorzugt werden als eingelagerte Verbindungen Melamin oder Melaminderivate, insbesondere solche der Formel (VII) 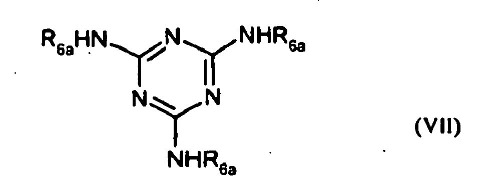 eingesetzt, worin
- R₆ₐ: für Wasserstoff oder C₁-C₄-Alkyl, das gegebenenfalls mit OH-Gruppen substituiert ist, steht,
ganz besonders bevorzugt, worin
- R₆ₐ: für Wasserstoff steht.

Die Menge an Substanz, die in das Kristallgitter der Metallverbindungen eingelagert werden kann, liegt in der Regel bei 5 % bis 200 Gew.-%, insbesondere 5 bis 120 Gew.-%, bezogen auf die Menge an Wirtsverbindung. Bevorzugt eingelagert werden 10 bis 100 Gew.-%. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genante Menge an Substanz zugesetzt werden, wobei man gegebenenfalls darauf verzichten kann, einen Überschuss auszuwaschen. Bevorzugt sind Mengen von 10 bis 150 Gew.-%.

Das in der erfindungsgemäßen Präparation enthaltende Pigment der Komponente a) besitzt vorzugsweise eine Oberfläche (m²/g) von 70 bis 150 m²/g, insbesondere 85 bis 140 m²/g, ganz besonders bevorzugt 100 bis 130 m²/g. Die Oberfläche wird nach DIN 66131 ermittelt: Bestimmung der spezifischen Oberfläche von Feststoffen durch Gasadsorption nach Brunauer, Emmett und Teller (B.E.T.)

Als bevorzugtes Metall der Metallverbindung der Komponente c) kommt in Frage: Li, Na, K, Ca, Ba, Al, Mn, Co, Cu, Zn, La, Ce, insbesondere Na, K, Co, Cu, ganz besonders bevorzugt sind Co und Cu.

Die Metallverbindung der Komponente c) kann beispielsweise als anorganisches oder organisches Salz oder bevorzugt als organischer Metallkomplex vorliegen. Im letzteren Fall liegt sie vorzugsweise als Metallkomplex einer Azoverbindung der Formel (I) vor. In diesem Fall handelt es sich besonders bevorzugt um dieselbe Azoverbindung, wie die der Komponente a).

Vorzugsweise enthält ein solcher Metallkomplex wenigstens eine andere Verbindung eingelagert, insbesondere handelt es sich dabei um dieselbe eingelagerte Verbindung wie die der Komponente a).

Die Präparation enthält vorzugsweise 50 bis 5.000 ppm, besonders bevorzugt 200 bis 2.500 ppm, ganz besonders bevorzugt 200 - 1.000 ppm eines von dem Metall des Metallkomplexes der Komponente a) verschiedenen Metalls, bezogen auf die Komponente a).

Es ist besonders überraschend, dass die erfindungsgemäßen Pigmentpräparationen, die geringe Mengen vorzugsweise des Metalls der Komponente c) (10 bis 10.000 ppm, bevorzugt 50 bis 5.000 ppm, besonders bevorzugt 200 bis 2.500 ppm, ganz besonders bevorzugt 200 - 1.000 ppm bezogen auf Komponente a)) enthalten, das von dem Metall der Metallverbindung der Komponenten a) und b) verschieden ist, eine deutlich verbesserte Brillanz und/oder auch einen deutlich verbesserten Farbton aufweisen. Der Fachmann hätte aufgrund der Tatsache, dass ein Mischen von verschiedenen Farbmitteln in der Regel einen stumpferen Farbton ergibt, erwartet, dass sich Brillanz und Farbton nicht verbessern, sondern z.B. linear verschlechtern, d.h. der Fachmann hätte in Abhängigkeit von der Menge des Metalls der Komponente c) z.B. immer stumpfere, grünere Farbtöne erwartet.

Das Metall der Metallverbindung der Komponente c) ist vorzugsweise mit der Atomabsorptionsspektroskopie bestimmbar.

Die erfindungsgemäßen Präparationen sind vorzugsweise bei Raumtemperatur fest. Sie können neben den Komponenten a), c) und gegebenenfalls b) weitere Zusätze enthalten.

Die Eisenverbindung der Komponente b) kann beispielsweise als organisches oder anorganisches Salz oder auch als Metallkomplex vorliegen. Im letzteren Fall liegt sie beispielsweise als Metallkomplex einer Azoverbindung der Formel (I) vor, beispielsweise als Fe-Komplex derselben Azoverbindung wie die der Komponente a).

Weitere Zusätze sind beispielsweise Dispergiermittel, Carbonsäure- und Sulfonsäureamide sowie für Pigmentpräparation übliche Zusätze.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 µm verstanden, insbesondere von 0,005 bis 1 µm, besonders bevorzugt von 0,005 bis 0,5 µm. Die erfindungsgemäße Präparation liegt vorzugsweise fein partikulär vor.

Geeignete Dispergiermittel sind beispielsweise anionisch, kationisch, amphoter oder nichtionogen.

Das Dispergiermittel wird vorzugsweise in einer Menge von 0,1 bis 100 Gew.-%, insbesondere 0,5 bis 60 Gew.-%, bezogen auf das eingesetzte Pigment der Komponente a) in der Pigmentpräparation, verwendet.

Selbstverständlich kann die Präparation noch weitere Zusätze enthalten. So können beispielsweise die als die Viskosität einer wässrigen Suspension erniedrigenden und den Feststoffgehalt erhöhenden Zusätze wie Carbonsäure- und Sulfonsäureamide in einer Menge von bis zu 10 Gew.-%, bezogen auf die Präparation zugesetzt werden.

Besonders bevorzugt besteht die erfindungsgemäße Präparation aber zu mehr als 90, insbesondere mehr als 95, vorzugsweise mehr als 97 Gew.-% aus den Komponenten a) bis c) und Dispergiermittel.

Die Erfindung betrifft weiterhin ein Verfahren zur Herstellung der erfindungsgemäßen Präparation, das dadurch gekennzeichnet ist, dass man einen Nickelkomplex einer Azoverbindung der Formel (I), die eine weitere Verbindung eingelagert enthält (Komponente a)), gegebenenfalls mit einer Fe-Verbindung (Komponente b)), dessen Fe-Gehalt weniger als 30 ppm, bezogen auf die Komponente a), beträgt und mit wenigstens einer Metallverbindung deren Metall von dem der Komponenten a) und b) verschieden ist und ausgewählt ist aus der Gruppe der Alkalimetalle wie Li, Na und K, der Erdalkalimetalle wie Mg, Ca und Ba, der Lanthanoiden wie La, Ce, Pr und Nd sowie Al, Sc, Ti, V, Cr, Mn, Co, Cu und Zn, und deren Metallgehalt 10 bis 10.000 ppm, bezogen auf die Komponente a), beträgt und gegebenenfalls mit weiteren Zusätzen mischt.

Die Erfindung betrifft weiterhin ein Verfahren zur Herstellung der erfindungsgemäßen Pigmentpräparation, wobei die Azoverbindungen der Formel (I) mit einem Nickelsalz a) (für die Komponente a)) gegebenenfalls in Gegenwart einer Fe-Verbindung und in Gegenwart eines jeweils davon verschiedenen Metallsalzes c) (für die Komponente c)), deren Metall ausgewählt ist aus der Gruppe der Alkalimetalle wie Li, Na und K, der Erdalkalimetalle wie Mg, Ca und Ba, der Lanthanoiden wie La, Ce, Pr und Nd sowie Al, Sc, Ti, V, Cr, Mn, Co, Cu und Zn, komplexiert werden und die entstandenen Metallkomplexe mit der einzulagernden Verbindung umgesetzt werden, **dadurch gekennzeichnet, dass** der Gehalt an Metall des Metallsalzes c), bezogen auf die Summe von Metallkomplex und eingelagerten Verbindung, 10 bis 10.000 ppm beträgt, und der Eisengehalt weniger als 30 ppm, bezogen auf die Komponente a) beträgt.

Ein bevorzugtes Verfahren ist **dadurch gekennzeichnet, dass** die Azoverbindung der Formel (I), vorzugsweise als Alkalisalz wie Na-, Li- oder K-Salz, mit einem Nickelsalz a) in Gegenwart eines davon verschiedenen Metallsalzes c) von Metallen ausgewählt aus der Gruppe Li, Na, K, Mg, Ca, Ba, Al, Sc, Ti, V, Cr, Mn, Co, Cu, Zn, La, Ce, Pr, Nd, besonders bevorzugt Na, K, Ca, Ba, Al, Mn, Co, Cu, Zn, La und Ce umgesetzt wird, vorzugsweise bei pH <7, und der entstandene Metallkomplex mit der einzulagernden Verbindung umgesetzt wird, vorzugsweise bei einem pH von 1 bis 7. Eine bevorzugte Ausführungsform des erfindungsgemäßen Verfahrens ist **dadurch gekennzeichnet, dass** im Anschluss an die Einlagerung der pH auf größer gleich 4,5 vorzugsweise auf 4,5 bis 7 angehoben wird, sofern die Einlagerung selbst bei einem pH von kleiner 4,5 erfolgte.

Die Eisenquelle kann entweder ein Eisensalz sein, das entweder als Verunreinigung in den anderen Metallsalzen enthalten ist, extra zugegeben wurde oder beispielsweise durch Geräteabrieb ins System gekommen ist.

Ein weiteres bevorzugtes Verfahren ist **dadurch gekennzeichnet, dass** die Azoverbindung der Formel (I), vorzugsweise als Alkalisalz wie Na-, Li- oder K-Salz, vorgelegt wird, dass die einzulagernde Verbindung zugegeben wird und danach mit einem Nickelsalz a) in Gegenwart eines davon verschiedenen Metallsalzes von Metallen ausgewählt aus der Gruppe Li, Na, K, Mg, Ca, Ba, Al, Sc, Ti, V, Cr, Mn, Co, Cu, Zn, La, Ce, Pr, Nd, besonders bevorzugt Na, K, Ca, Ba, Al, Mn, Co, Cu, Zn, La, Ce umgesetzt wird, vorzugsweise bei pH <7.

Ein weiteres bevorzugtes Verfahren ist **dadurch gekennzeichnet, dass** die Azoverbindung der Formel (I), vorzugsweise als Alkalisalz wie Na-, Li- oder K-Salz, vorgelegt wird, dass die einzulagernde Verbindung zugegeben wird und danach mit einem Nickelsalz a) umgesetzt wird, vorzugsweise bei pH <7. Danach wird ein davon verschiedenes Metallsalz c) von Metallen ausgewählt aus der Gruppe Li, Na, K, Mg, Ca, Ba, Al, Sc, Ti, V, Cr, Mn, Co, Cu, Zn, La, Ce, Pr, Nd, besonders bevorzugt Na, K, Ca, Ba, Al, Mn, Co, Cu, Zn, La, Ce zugegeben und bei vorzugsweise pH < 7 umgesetzt. Dieses Verfahren ist besonders dann vorteilhaft, wenn das Metall der Komponente c) stärkere Komplexe mit der Azoverbindung der Formel (I) bildet als das Nickel der Komponente a).

Ein weiteres bevorzugtes Verfahren ist **dadurch gekennzeichnet, dass** die Azoverbindung der Formel (I), vorzugsweise als Alkalisalz wie Na-, Li- oder K-Salz, vorgelegt wird, dass die einzulagernde Verbindung zugegeben wird und danach mit einem Nickelsalz a) umgesetzt wird, vorzugsweise bei pH <7, wobei das Nickelsalz a) im geringen Unterschuss (90 bis 99 % der molaren Menge) eingesetzt wird. Dieses Verfahren ist besonders dann vorteilhaft, wenn beispielsweise eine Dotierung durch das eingesetzte Alkalisalz der Azoverbindung der Formel (I) erzielt werden soll.

Ein weiteres bevorzugtes Verfahren ist **dadurch gekennzeichnet, dass** die Azoverbindung der Formel (I), vorzugsweise als Alkalisalz wie Na-, Li- oder K-Salz, vorgelegt wird, dass die einzulagernde Verbindung zugegeben wird und danach mit einem Nickelsalz a) in Gegenwart eines davon und von Eisen verschiedenen Metallsalzes von Metallen ausgewählt aus der Gruppe Li, Na, K, Mg, Ca, Ba, Al, Sc, Ti, V, Cr, Mn, Co, Cu, Zn, La, Ce, Pr, Nd, besonders bevorzugt Na, K, Ca, Ba, Al, Mn, Co, Cu, Zn, La, Ce,für die Komponente c) umgesetzt wird, vorzugsweise bei pH <7, wobei das Nickelsalz für die Komponente a) vorzugsweise im geringen Unterschuss (z.B. 99 % der molaren Menge) eingesetzt wird. Dieses Verfahren ist besonders dann vorteilhaft, wenn das Metall der Komponente c) schwächere Komplexe mit der Azoverbindung der Formel (I) bildet als das Nickel der Komponente a).

Der optionale Eisengehalt kann beispielsweise durch gezielte Metallsalzzugabe, oder Verunreinigungen dem System zugegeben werden oder ergibt sich allein durch die Verwendung Fe-haltiger Reaktoren.

Als Metallsalze kommen vorzugsweise wasserlösliche Metallsalze der oben genannten Metalle in Frage, insbesondere Chloride, Bromide, Acetate, Nitrate, Sulfate usw. Bevorzugt eingesetzte Metallsalze besitzen eine Wasserlöslichkeit von mehr als 20 g/l, insbesondere mehr als 50 g/l bei 20°C.

Geeignete Metallsalze zur Herstellung der Salze und Komplexe der Azoverbindungen der Komponente a) sind beispielsweise Nickelformiat, Nickelnitrat, Nickelsulfat, Nickelchlorid und Nickelacetat und der Komponente c) sind beispielsweise: Magnesiumchlorid, Magnesiumsulfat, Calciumchlorid, Calciumacetat, Calciumformiat, Bariumchlorid, Bariumnitrat, Bariumacetat, Bariumcarbonat, Strontiumnitrat, Manganchlorid, Mangansulfat, Cobaltchlorid, Cobaltnitrat, Cobaltsulfat, Aluminiumsulfat, Aluminiumnitrat, Chrom-(III)-sulfat, Chrom-(III)-nitrat, Zinkchlorid, Zinksulfat, Zinkacetat, Cadmiumchlorid, Cadmiumsulfat, Cadmiumnitrat, Kupfer-(II)-sulfat, Kupfer-(II)-chlorid, Kupfer-(II)-acetat Kupfer-(II)-formiat, Lanthan-chlorid, Lanthannitrat, Cerchlorid und Cernitrat.

Die auf diese Weise erhaltenen Mischungen von Metallverbindungen der Komponenten a), c) und gegebenenfalls b), im folgenden kurz "Pigmente" genannt, können dann durch Filtration ihrer wässrigen Suspension als wässriger Presskuchen isoliert werden. Dieser Presskuchen kann beispielsweise nach Waschen mit heißem Wasser, nach üblichen Trocknungsverfahren getrocknet werden.

Als Trocknungsverfahren kommen beispielsweise die Schaufeltrocknung oder die Sprühtrocknung entsprechend wässriger Slurries in Frage.

Anschließend kann das Pigment nachgemahlen werden.

Sofern die Pigmente für die gewünschte Anwendung zu kornhart bzw. zu dispergierhart sind, können sie beispielsweise gemäß der in DE-A 19 847 586 beschriebenen Methode in kornweiche Pigmente umgewandelt werden.

Weiterhin bevorzugt sind daher die erfindungsgemäßen Pigmentpräparationen enthaltend neben den Komponenten a), c) und gegebenenfalls b) wenigstens ein Dispergiermittel.

Bevorzugt handelt es sich bei den Pigmentpräparationen um feste Präparationen, die vorzugsweise als Pulver oder Granulate vorliegen.

Die erfindungsgemäßen Pigmente zeichnen sich durch besonders gute Dispergierbarkeit und eine hohe Farbstärke aus. Chroma und Transparenz sind hervorragend einstellbar.

Die erfindungsgemäßen Pigmentpräparationen eignen sich hervorragend für alle Pigmentanwendungszwecke.

Zum Beispiel eignen sie sich zum Pigmentieren von Lacken aller Art für die Herstellung von Druckfarben, Leimfarben oder Binderfarben, für die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier verwendet werden. Aus diesen Pigmenten können feinteilige, stabile, wässrige Pigmentierungen von Dispersions- und Anstrichfarben, die für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

Die Pigmente eignen sich hervorragend für Ink Jet Anwendungen und für Farbfilter für Flüssigkristallanzeigen.

Besonders bevorzugt sind solche erfindungsgemäßen Pigmentpräparationen, enthaltend die Komponenten a), c) und gegebenenfalls b) und
d) eine organische Verbindung ausgewählte aus der Gruppe der Terpene, Terpenoide, Fettsäuren, Fettsäureester und der Homo- oder Copolymere, wie statistische- oder Block-Copolymere mit einer Löslichkeit in pH neutralem Wasser bei 20°C von weniger als 1 g/l, insbesondere weniger als 0,1 g/l.

Besonders bevorzugt sind diese erfindungsgemäßen Pigmentpräparationen in fester Form, vorzugsweise in Form von Pulver oder Granulat.

Die organische Verbindung der Komponente (d) ist vorzugsweise bei Raumtemperatur (20°C) unter Normalatmosphäre fest oder flüssig und weist im Falle, dass sie flüssig ist, einen Siedepunkt von vorzugsweise >100°C, insbesondere >150°C auf.

Bevorzugte Polymere besitzen sowohl einen hydrophilen wie auch einen hydrophoben vorzugsweise polymeren Molekülteil. Beispiele derartiger Polymere sind statistische Copolymere auf Basis von Fettsäuren oder langkettigen C₁₂-C₂₂-Kohlenwasserstoffen und Polyalkylenglykolen, insbesondere Polyethylenglykol. Ferner Block-Copolymere auf Basis von (Poly)Hydroxy Fettsäuren und Polyalkylenglykol, insbesondere Polyethylenglykol, sowie Pfropf-Copolymere auf Basis von Poly(meth)acrylat und Polyalkylenglykol, insbesondere Polyethylenglykol.

Als bevorzugte Verbindungen aus der Gruppe der Terpene, Terpenoide, Fettsäuren und Fettsäureester seien genannt: Ocimen, Myrcen, Geraniol, Nerol, Linalool, Citronellol, Geranial, Citronellal, Neral, Limonen, Menthol, beispielsweise (-)-Menthol, Menthon oder bicyclische Monoterpene, gesättigte und ungesättigte Fettsäuren mit 6 bis 22 C-Atomen, wie beispielsweise Ölsäure, Linolsäure und Linolensäure oder Mischungen davon.

Als organische Verbindungen der Komponente (d) kommen ferner auch die oben im Zusammenhang mit den weiter oben genannten Einschluss-Verbindungen genannten infrage soweit sie den für die Verbindung der Komponente (d) gewünschten Kriterien gehorchen.

Sofern die einzulagernde Verbindung und die Verbindung der Komponente d) identisch sind, differenziert man über die Auswaschbarkeit der Verbindung d) mit einem geeigneten Lösungsmittel.

Besonders bevorzugte Pigmentpräparationen enthalten:
- 50 - 99 Gew.%: der Komponenten a), c) und gegebenenfalls b) und
- 1 - 50 Gew.%: vorzugsweise 2 bis 50 Gew.% wenigstens eine Verbindung der Komponente (d).

Gegebenenfalls enthält die erfindungsgemäße Pigmentpräparation zusätzlich ein oberflächenaktives Mittel (e).

Geeignete oberflächenaktive Mittel (e) sind beispielsweise anionischer, kationischer, amphoterer oder nichtionogener Natur.

Geeignete anionische oberflächenaktive Mittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem oberflächenaktive Mittel aus der Gruppe der Sulfobernsteinsäureester sowie Alkylbenzolsulfonate. Außerdem ionisch modifizierte, insbesondere sulfatierte oder carboxilierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene C₆-C₂₂-Fettsäurealkohole, die gesättigt oder ungesättigt sind, verstanden. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraßligninsulfonaten sind gut wirksam. Besonders geeignet sind Ligninsulfonate mit einem durchschnittlichen Molekulargewicht zwischen 1 000 und 100 000 g/mol, einem Gehalt an aktivem Ligninsulfonat von mindestens 80 Gew.-% und vorzugsweise mit niedrigem Gehalt an mehrwertigen Kationen. Der Sulfonierungsgrad kann in weiten Grenzen variieren.

Als nichtionische oberflächenaktive Mittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:
a1) gesättigten und/oder ungesättigten Fettalkoholen mit 6 bis 22 C-Atomen oder
b1) Alkylphenolen mit 4 bis 12 C-Atomen im Alkylrest oder
c1) gesättigten und/oder ungesättigten Fettaminen mit 14 bis 20 C-Atomen oder
d1) gesättigten und/oder ungesättigten Fettsäuren mit 14 bis 20 C-Atomen oder
e1) hydrierte und/oder unhydrierte Harzsäuren.

Als Ethylenoxid-Addukte kommen insbesondere die unter a1) bis e1) genannten alkylierbaren Verbindungen mit 5 bis 120, insbesondere 5 bis 100, insbesondere 5 bis 60, besonders bevorzugt 5 bis 30 Mol Ethylenoxid in Frage.

Als oberflächenaktive Mittel eignen sich ebenfalls die aus DE-A 19 712 486 oder aus DE-A 19 535 246 bekannten Ester des Alkoxylierungsproduktes der Formel (X), die der Formel (XI) entsprechen sowie diese gegebenenfalls in Mischung mit den zugrundeliegenden Verbindungen der Formel (X). Das Alkoxylierungsprodukt eines Styrol-Phenol-Kondensats der Formel (X) ist wie nachfolgend definiert: 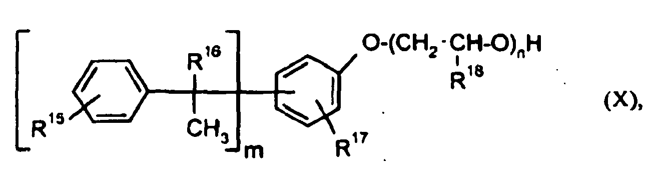 in der
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

Die Ester der Alkoxylierungsprodukte (X) entsprechen der Formel (XI) 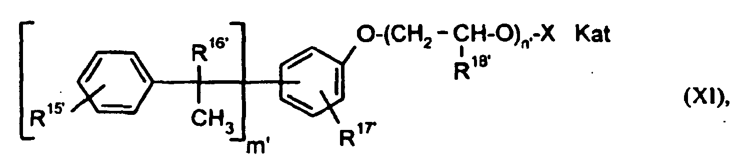 in der
- R^{15'}, R^{16'}, R^{17'}, R^{18'}, m' und n': den Bedeutungsumfang von R¹⁵, R¹⁶, R¹⁷, R¹⁸, m bzw. n, jedoch unabhängig hiervon, annehmen,
- X: die Gruppe -SO₃, -SO₂, -PO₃ oder -CO-(R¹⁹)-COO bedeutet,
- Kat: ein Kation aus der Gruppe von H, Li, Na, K, NH₄ oder HO-CH₂CH₂-NH₃ ist, wobei im Falle von X =-PO₃ zwei Kat vorliegen und
- R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Als ein bevorzugtes oberflächenaktive Mittel wird die Verbindung der Formel (XI) eingesetzt. Vorzugsweise eine Verbindung der Formel (XI), worin X einen Rest der Formel -CO-(R¹⁹)-COO- bedeutet und R¹⁹ die obige Bedeutung besitzt.

Bevorzugt ist es ebenfalls als oberflächenaktive Mittel eine Verbindung der Formel (XI) zusammen mit einer Verbindung der Formel (X) einzusetzen. Vorzugsweise enthält das oberflächenaktive Mittel in diesem Fall 5 bis 99 Gew.-% der Verbindung (XI) und 1 bis 95 Gew.-% der Verbindung (X).

Das oberflächenaktive Mittel der Komponente e) wird vorzugsweise in einer Menge von 0,1 bis 100 Gew.-%, insbesondere 0,5 bis 60 Gew.-%, bezogen auf das eingesetzte Pigment der Komponente a), verwendet.

Selbstverständlich kann die erfindungsgemäße Präparation noch weitere Zusätze enthalten. So können beispielsweise viskositätsemiedrigende oder feststofferhöhende Zusätze im Verlauf der Herstellung wässriger Suspensionen in einer Menge von bis zu 10 Gew.-%, bezogen auf die Präparation, eingebracht werden.

Weitere Zusätze sind beispielsweise anorganische und organische Basen sowie für Pigmentpräparation übliche Zusätze.

Als Basen sind zu nennen: Alkalihydroxide, wie beispielsweise NaOH, KOH oder organische Amine wie Alkylamine, insbesondere Alkanolamine oder Alkylalkanolamine.

Als besonders bevorzugt sind zu nennen Methylamin, Dimethylamin, Trimethylamin, Ethanolamin, n-Propanolamin, n-Butanolamin, Diethanolamin, Triethanolamin, Methylethanolamin oder Dimethylethanolamin.

Als Carbonsäure- und Sulfonsäureamide sind beispielsweise geeignet: Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3-Dihydroxychinoxalin, 2,3-Dihydroxychin oxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Die Base ist gegebenenfalls bis zu einer Menge von 20 Gew.%, vorzugsweise bis 10 Gew.-%, bezogen auf Pigment der Komponente a), enthalten.

Weiterhin können die Pigmentpräparationen herstellungsbedingt noch anorganische und/oder organische Salze enthalten.

Besonders bevorzugt bestehen die erfindungsgemäßen Präparationen aus mehr als 90 insbesondere mehr als 95, vorzugsweise mehr als 97 Gew.-% an den Komponenten a), c) und gegebenenfalls b), organische Verbindung der Komponente d) und gegebenenfalls oberflächenaktives Mittel der Komponente e) und gegebenenfalls einer Base.

Die erfindungsgemäße Verwendung der oben beschriebenen Pigmente bzw. die der erfmdungsgemäßen Pigmentpräparationen zur Herstellung von Farbfiltern für Flüssigkristallanzeigen sei im Folgenden am Beispiel der Pigment-Dispersionsmethode nach dem Photolackverfahren beschrieben.

Die erfindungsgemäße Verwendung der erfindungsgemäßen Pigmentpräparationen zur Herstellung von Farbfiltern ist beispielsweise dadurch gekennzeichnet, dass das "Pigment" oder die Pigmentpräparation, insbesondere die feste Pigmentpräparation, gegebenenfalls mit einem Bindemittelharz und einem organischen Lösungsmittel, gegebenenfalls unter Zusatz eines Dispergiermittels, homogenisiert und anschließend kontinuierlich oder diskontinuierlich auf eine Teilchengröße nach Anzahl (elektronenmikroskopische Bestimmung) von 99,5 % <1000 nm, vorzugsweise 95 % <500 nm und insbesondere 90 % <200 nm nasszerkleinert wird.

Als Nasszerkleinerungsverfahren kommen beispielsweise Rührer- oder Dissolverdispergierung, Mahlen mittels Rührwerkskugel- oder -perlmühlen, Kneter, Walzenstuhl, Hochdruckhomogenisierung oder Ultraschalldispergierung in Frage.

Während der Dispergierbehandlung oder im Anschluss daran erfolgt die Zugabe von mindestens einem photohärtbaren Monomeren und einem Photoinitiator. Im Anschluss an die Dispergierung kann noch weiteres Bindemittelharz, Lösungsmittel oder für Photolacke übliche Zuschlagstoffe eingebracht werden, wie es für die gewünschte photosensitive Beschichtungsmitteleinstellung (Photolack) zur Herstellung der Farbfilter erforderlich ist. Im Rahmen dieser Erfindung wird unter Photolack eine Präparation verstanden, die wenigstens ein photohärtbares Monomer und einen Photoinitiator enthält.

Als mögliche Dispergiermittel kommen allgemein handelsübliche wie beispielsweise polymere, ionogene oder nicht-ionogene Dispergiermittel bspw. auf Basis von Polycarbonsäuren oder Polysulfonsäuren, sowie Polyethylenoxid-Polypropylenoxid-Block-Copolymere in Betracht. Ferner können auch Derivate organischer Farbstoffe als Dispergiermittel oder Co-Dispergiermittel verwendet werden.

Bei der Herstellung der Farbfilter fallen daher "Zubereitungen" an, die bezogen auf die Zubereitung enthalten:
- wenigstens ein Pigment im obigen Sinne, d.h. Mischung aus Komponenten a), c) und gegebenenfalls b),
- gegebenenfalls ein Bindemittelharz,
- wenigstens ein organisches Lösungsmittel sowie
- gegebenenfalls ein Dispergiermittel.

In einer bevorzugten Ausführungsform enthält die Zubereitung (Angaben bezogen auf Zubereitung):

| | |
|---|---|
| 1 - 50 Gew.-% | ein Pigment im obigen Sinne |
| 0 - 20 Gew.-% | Bindemittelharz |
| 0 - 20 Gew.-% | Dispergiermittel |
| 10 - 94 Gew.-% | organisches Lösungsmittel |

Die Beschichtung des Photolackes auf eine Platte zur Erzeugung der gefärbten Bildelementmuster kann entweder durch direkten oder indirekten Auftrag geschehen. Als Auftragsmethoden seien bspw. genannt: Roller-Coating, Spin-Coating, Spray-Coating, Dip-Coating und Air-Knife-Coating.

Als Platten kommen je nach Verwendung beispielsweise in Frage: transparente Gläser wie weiße oder blaue Glasplatte, mit Silikat beschichtete blaue Glasplatte, Kunstharzplatte oder -filme auf Basis von z.B. Polyester-, Polycarbonat-, Acryl-, oder Vinylchloridharz, ferner Metallplatten auf Basis von Aluminium, Kupfer, Nickel, oder Stahl sowie Keramikplatten oder Halbleiterplatten mit aufgebrachten photoelektrischen Transferelementen.

Die Auftragung erfolgt im Allgemeinen so, dass die Schichtdicke der erhaltenen photosensitiven Schicht bei 0,1 bis 10 µm liegt.

Im Anschluss an den Auftrag kann eine thermische Trocknung der Schicht erfolgen.

Die Belichtung erfolgt vorzugsweise, indem die photosensitive Schicht einem aktiven Lichtstrahl vorzugsweise in Form eines Bildmusters mittels Photomaske ausgesetzt wird. Hierdurch wird an den belichteten Stellen die Schicht gehärtet. Geeignete Lichtquellen sind z.B.: Hochdruck- und Ultrahochdruckquecksilberdampflampe, Xenon-, Metallhalogenid-, Fluoreszenzlampe sowie Laserstrahl im sichtbaren Bereich.

Durch die Entwicklung im Anschluss an die Belichtung wird der unbelichtete Teil der Beschichtung entfernt und man erhält die gewünschte Bildmusterform der Farbelemente. Übliche Entwicklungsmethoden umfassen das Besprühen mit oder Tauchen in wässrige alkalische Entwicklerlösung oder in ein organisches Lösungsmittel, das anorganische Alkali wie z.B. Natrium- oder Kaliumhydroxid, Natriummetasilikat oder organische Basen wie Monoethanolamin, Diethanolamin, Triethanolamin, Triethylamin oder deren Salze enthält.

Nach der Entwicklung erfolgt in der Regel eine thermische Nachtrocknung/-härtung der Bildmuster.

### Weitere Pigmente:

Die Verwendung der "Pigmente" im obigen Sinne ist vorzugsweise dadurch gekennzeichnet, dass diese alleine oder in Mischung mit "anderen Pigmenten" in den Farbfiltern bzw. Pigmentpräparationen oder Zubereitungen für Farbfilter eingesetzt werden.

Unter "andere Pigmente" seien sowohl andere Metallsalze einer Azo-Verbindung der Formel (I) oder darauf basierende Pigmentpräparationen verstanden als auch andere organische Pigmente.

Hinsichtlich der Auswahl anderer gegebenenfalls mitzuverwendender Pigmente besteht erfindungsgemäß keine Einschränkung. Es kommen sowohl anorganische als auch organische Pigmente in Frage.

Bevorzugte organische Pigmente sind z.B. solche der Monoazo-, Disazo-, verlackte Azo-, β-Naphthol-, Napthol AS-, Benzimidazolon-, Disazokondensations-, Azometallkomplex-, Isoindolin- und Isoindolinon-Reihe, ferner polycyclische Pigmente wie z.B. aus der Phthalocyanin-, Chinacridon-, Perylen-, Perinon-, Thioindigo-, Anthrachinon-, Dioxazin-, Chinophthalon- und Diketopyrrolopyrrol-Reihe. Außerdem verlackte Farbstoffe wie Ca-, Mg- und Al-Lacke von sulfonsäure- oder carbonsäuregruppenhaltigen Farbstoffen.

Beispiele für gegebenenfalls mitzuverwendende andere organische Pigmente sind:
gelbe Pigmente vom
Colour Index Pigment Yellow 12, 13, 14, 17, 20, 24, 74, 83, 86, 93, 94, 109, 110, 117, 125, 137, 138, 139, 147, 148, 150, 153, 154, 166, 173, 185, oder
Colour Index Pigment Orange 13, 31, 36, 38, 40, 42, 43, 51, 55, 59, 61, 64, 65, 71, 72, 73 oder
Colour Index Pigment Red 9, 97, 122, 123, 144, 149, 166, 168, 177, 180, 192, 215, 216, 224, 254, 272, oder
Colour Index Pigment Green 7, 10, 36, 37, 45, oder
Colour Index Pigment Blue 15, 15:1, 15:2, 15:3, 15:4, 15:6, 16 sowie
Colour Index Pigment Violett 19, 23.

Sofern "andere Pigmente" zusätzlich eingesetzt werden, beträgt der Anteil von "Pigment" im obigen Sinne vorzugsweise 1-99 Gew.-%, insbesondere 20-80 Gew.-% bezogen auf die eingesetzte Gesamtmenge aller Pigmente.

Besonders bevorzugt sind die erfindungsgemäßen Pigmentpräparationen sowie Zubereitungen, enthaltend "Pigmente" im obigen Sinne und C.I. Pigment Green 36 im Verhältnis von 20 bis 80 % "Pigment" zu 80 bis 20 % C.I. Pigment Green 36, vorzugsweise von 40 bis 60 % zu 60 bis 40 %.

Als Bindemittelharze, die zusammen mit dem "Pigment" oder darauf basierender Pigmentpräparationen in Farbfiltern bzw. in den Zubereitungen zur Herstellung von Farbfiltern z.B. nach der Pigment-Dispersionsmethode, eingesetzt werden können, besteht erfindungsgemäß keine besondere Einschränkung, insbesondere kommen für die Anwendung in Farbfiltern an sich bekannte filmbildende Harze in Frage.

Beispielsweise kommen Bindemittelharze aus der Gruppe der Celluloseharze wie Carboxymethylhydroxyethylcellulose und Hydroxyethylcellulose, Acrylharze, Alkydharze, Melaminharze, Epoxidharze, Polyvinylalkohole, Polyvinylpyrrolidone, Polyamide, Polyamidimine, Polyimide, Polyimidvorstufen wie solche der Formel (14), offenbart in JP-A 11 217 514 und deren Veresterungsprodukte in Frage.

Als solche sind beispielsweise Umsetzungsprodukte von Tetracarbonsäuredianhydrid mit Diaminen zu nennen.

Als Bindemittelharze kommen auch solche in Frage, die photopolymerisierbare, ungesättigte Bindungen enthalten. Die Bindemittelharze können beispielsweise solche aus der Gruppe der Acrylharze aufgebaut sein. Dabei sind insbesondere Mono- und Copolymere polymerisierbarer Monomere zu nennen wie z.B. (Meth)acrylsäuremethylester, (Meth)acrylsäureethylester, (Meth)acrylsäurepropylester, (Meth)acrylsäurebutylester, Styrol und Styrolderivate, ferner Copolymere zwischen carboxylgruppentragenden polymerisierbaren Monomeren wie (Meth)acrylsäure, Itaconsäure, Maleinsäure, Maleinsäureanhydrid, Maleinsäuremonoalkylester, insbesondere mit Alkyl von 1 bis 12 C-Atomen, und polymerisierbare Monomere wie (Meth)acrylsäure, Styrol und Styrolderivate wie z.B. α-Methylstyrol, m- oder p-Methoxystyrol, p-Hydroxystyrol. Als Beispiele seien genannt Umsetzungsprodukte von carboxylgruppenhaltigen polymeren Verbindungen mit Verbindungen, die jeweils einen Oxiranring und eine ethylenisch ungesättigte Verbindung enthalten wie z.B. Glycidyl(meth)acrylat, Acrylglycidylether und Itaconsäuremonoalkylglycidylether usw., ferner Umsetzungsprodukte von carboxylgruppenhaltigen polymeren Verbindungen mit Verbindungen, die jeweils eine Hydroxylgruppe und eine ethylenisch ungesättigte Verbindung (ungesättigte Alkohole) enthalten wie Allylalkohol, 2-Buten-4-ol, Oleylalkohol, 2-Hydroxyethyl-(meth)acrylat, N-Methylolacrylamid usw.;
weiterhin können derartige Bindemittelharze auch ungesättigte Verbindungen, die freie Isocyanatgruppen besitzen, enthalten.

Im Allgemeinen liegt die Äquivalenz der Ungesättigtheit (Molgewicht Bindemittelharz pro ungesättigte Verbindung) der genannten Bindemittelharze bei 200 bis 3 000, insbesondere 230 bis 1 000, um sowohl eine ausreichende Photopolymerisierbarkeit und Härte des Films zu erreichen. Der Säurewert liegt im Allgemeinen bei 20 bis 300, insbesondere 40 bis 200, um eine genügende Alkali-Entwicklungsfähigkeit nach der Belichtung des Films zu erzielen.

Das mittlere Molgewicht der einzusetzenden Bindemittelharze liegt zwischen 1 500 und 200 000, insbesondere 10 000 bis 50 000 g/mol.

Die bei der erfindungsgemäßen Verwendung der Pigmentpräparationen für Farbfilter eingesetzten organischen Lösungsmittel sind z.B. Ketone, Alkylenglykolether, Alkohole und aromatische Verbindungen. Beispiele aus der Gruppe der Ketone sind: Aceton, Methylethylketon, Cyclohexanon etc.; aus der Gruppe der Alkylenglykolether: Methylcellosolve (Ethylenglykolmonomethylester), Butylcellosolve (Etylenglykolmonobutylether) Methylcellosolveacetat, Ethylcellosolveacetat, Butylcellosolveacetat, Ethylenglykolmonopropylether, Ethylenglykolmonohexylether, Ethylenglykoldimethylether, Diethylenglykolethylether, Diethylenglykoldiethylether, Propylenglykolmonomethylether, Propylenglykolmonoethylether, Propylenglykolmonopropylether, Propylenglykolmonobutylether, Propylenglykolmonomethyletheracetat, Diethylenglykolmethyletheracetat, Diethylenglykolethyletheracetat, Diethylenglykolpropyletheracetat, Diethylenglykolisopropyletheracetat, Diethylenglykolbutyletheracetat, Diethylenglykol-t-butyletheracetat, Triethylenglykolmethyletheracetat, Triethylenglykolethyletheracetat, Triethylenglykolpropyletheracetat, Triethylenglykolisopropyletheracetat, Triethylenglykolbutyletheracetat, Triethylenglykol-t-butyletheracetat, etc.; aus der Gruppe der Alkohole: Methylalkohol, Ethylalkohol, Isopropylalkohol, n-Butylalkohol, 3-Methyl-3-methoxybutanol, etc.; aus der Gruppe der aromatischen Lösungsmittel Benzol, Toluol, Xylol, N-Methyl-2-Pyrrolidon, N-Hydroxymethyl-2-Essigsäureethylester, etc.

Weitere andere Lösungsmittel sind 1,2-Propandioldiacetat, 3-Methyl-3-methoxybutylacetat, Essigsäureethylester, Tetrahydrofuran, etc. Die Lösungsmittel können einzeln oder in Gemischen untereinander eingesetzt werden.

Die Erfmdung betrifft weiterhin einen Photolack, enthaltend wenigstens ein Pigment im obigen Sinne oder wenigstens eine erfindungsgemäße Pigmentpräparation und wenigstens ein photohärtbares Monomer sowie wenigstens einen Photoinitiator.

Die photohärtbaren Monomere enthalten im Molekül wenigstens eine reaktive Doppelbindung und gegebenenfalls andere reaktive Gruppen.

Als photohärtbare Monomere seien in diesem Zusammenhang insbesondere reaktive Lösungsmittel bzw. sog. Reaktivverdünner verstanden z.B. aus der Gruppe der mono-, di- , tri- und multifunktionelle Acrylate und Methacrylate, Vinylether, sowie Glycidylether. Als zusätzlich enthaltene reaktive Gruppen kommen in Frage Allyl-, Hydroxy-, Phosphat-, Urethan-, sek. Amin- und N-Alkoxymethylgruppen.

Derartige Monomere sind dem Fachmann bekannt und beispielsweise in [Römpp Lexikon, Lacke und Druckfarben, Dr. Ulrich Zorll, Thieme Verlag Stuttgart-New York, 1998, S. 491/492] aufgeführt.

Die Auswahl der Monomere richtet sich insbesondere nach der Art und Intensität der verwendeten Strahlenart der Belichtung, der gewünschten Reaktion mit dem Photoinitiator und den Filmeigenschaften. Es können auch Kombinationen von Monomeren eingesetzt werden.

Als Photoreaktionsstarter oder Photoinitiatoren seinen Verbindungen verstanden, die infolge der Adsorption sichtbarer oder ultravioletter Strahlung reaktive Zwischenprodukte bilden, die eine Polymerisationsreaktion beispielsweise der oben genannten Monomeren und/oder Bindemittelharze auslösen können. Photoreaktionsstarter sind ebenfalls allgemein bekannt und können ebenfalls aus [Römpp Lexikon, Lacke und Druckfarben, Dr. Ulrich Zorll, Thieme Verlag Stuttgart-New York, 1998, S. 445/446] entnommen werden.

Erfindungsgemäß besteht keine Einschränkung hinsichtlich der einzusetzenden photohärtbaren Monomeren oder Photoinitiatoren.

Die Erfindung betrifft bevorzugt Photolacke enthaltend
A) wenigstens ein "Pigment" im obigen Sinne, insbesondere in Mischung mit anderen Pigmenten, vorzugsweise C.I. Pigment Green 36 oder eine darauf basierende erfindungsgemäße Pigmentpräparation,
B1) wenigstens ein photohärtbares Monomer,
B2) wenigstens einen Photoinitiator,
C1) gegebenenfalls ein organisches Lösungsmittel,
D) gegebenenfalls ein Dispergiermittel,
E) gegebenenfalls ein Bindemittelharz,
sowie gegebenenfalls weitere Zusätze.

Erfindungsgemäß besteht auch keine Einschränkung hinsichtlich der Technologie zur Erzeugung der gefärbten Bildelementmuster auf Basis der erfindungsgemäß zu verwendenden Pigmente oder feste Pigmentpräparationen. Neben dem oben beschriebenen photolithographischen Verfahren sind andere Verfahren wie Offset-Druck, chemisches Ätzen oder Ink Jet Druck ebenso geeignet. Die Auswahl der geeigneten Bindemittelharze und Lösungsmittel bzw. Pigment-Trägermedien sowie weitere Zusätze sind auf das jeweilige Verfahren abzustimmen. Beim Ink Jet Verfahren, worunter sowohl der thermische als auch mechanische und piezzo-mechanische Ink Jet Druck verstanden werden, kommen neben rein organischen auch wässrig-organische Trägermedien für die Pigmente und gegebenenfalls Bindemittelharze in Frage, wässrig-organische Trägermedien werden sogar bevorzugt.

### Beispiele

### Beispiel 1: ohne Dotierung

1 Mol Diazobarbitursäure werden in 5 Liter 90°C-heißem Wasser mit 1 Mol Barbitursäure unter KOH-Titration bei pH 5 umgesetzt. 2 Mol Melamin werden zugegeben. Der pH wird mit Salzsäure auf 5 gestellt. 1 Mol einer 40%igen Nickelchloridlösung werden zugetropft. Nach 1h bei 90°C wird mit KOH auf pH 5 gestellt. Danach wird mit Salzsäure auf pH 1,5 gestellt und 3h bei 98°C getempert. Danach wird mit KOH auf pH 5 gestellt. Anschließend wird das Pigment auf einer Saugnutsche isoliert, gewaschen und bei 80°C im Vakuumtrockenschrank getrocknet und in einer üblichen Labormühle ca. 2 Minuten gemahlen.

In den nachfolgenden erfindungsgemäßen Beispielen wird die Nickelchloridlösung durch eine Mischlösung aus Nickelchlorid und Kupferchlorid ersetzt.

| | |
|---|---|
| Beispiel 1a | 1 Mol Ni ersetzt durch 0,998 Mol Ni + 0,002 Mol Cu |
| Beispiel 1b | 1 Mol Ni ersetzt durch 0,995 Mol Ni + 0,005 Mol Cu |
| Beispiel 1c | 1 Mol Ni ersetzt durch 0,99 Mol Ni + 0,01 Mol Cu |
| Beispiel 1d | 1 Mol Ni ersetzt durch 0,98 Mol Ni + 0,02 Mol Cu |
| Beispiel 1e | 1 Mol Ni ersetzt durch 0,96 Mol Ni + 0,04 Mol Cu |
| Beispiel 1f | 1 Mol Ni ersetzt durch 0,92 Mol Ni + 0,08 Mol Cu |
| Beispiel 1g | 1 Mol Ni ersetzt durch 0,84 Mol Ni + 0,16 Mol Cu |

Jeweils 4g des zu prüfenden Pigmentes wurden mit 396 g einer kommerziellen Weißpaste, beispielsweise Ready Nova 70 der Firma Nordsjö (Akzo Nobel), und 400 ml Glasperlen vom Durchmesser 2 mm in einer Süßmeier Perlmühle unter Kühlen 30 min gemahlen. Die Pasten wurden mit einer Spiralrakel (25 µm) auf Rakelpapier aufgetragen und farbmetrisch mit dem Farbmessgerät Color Guide 450 der Firma Gardner vermessen.

Für die Bestimmung der Coloristik ist ein Bindersystem geeignet. Diese Ergebnisse können auf die Coloristik für die LCD-Anwendung hinsichtlich Farbton und Brillanz sehr gut übertragen werden.

Das Prinzip der Farbmessung wird beispielsweise in der Bayer Farben Revue, Sonderheft 3/2 D, Farbmessung 1986 beschrieben.

Die Nullversuche haben definitionsgemäß die Farbstärke 100 %. DC und DH der Nullversuche sind definitionsgemäß 0.

| Beispiel | BET* | Binder Farbstärke | Binder DC | Binder DH |
|---|---|---|---|---|
| 1 | 110 | 100% | 0 | 0 |
| 1a | 107 | 101% | 0,8 | 0 |
| 1b | 106 | 100% | 1,2 | 0 |
| 1c | 106 | 101% | 1,9 | -0,1 |
| 1d | 106 | 100% | 2,3 | -0,1 |
| 1e | 107 | 100% | 1,6 | -0,2 |
| 1f | 113 | 101% | 0,5 | -0,9 |
| 1g | 114 | 101% | -0,7 | -1,4 |

| | | | | |
|---|---|---|---|---|
| *Angabe in m²/g, bestimmt nach DIN 66131. | | | | |

DC ist ein Maß für die Brillanz und wird farbmetrisch ermittelt. Ein positiver Wert ist gewünscht und steht für eine gegenüber dem Vergleichswert höhere Brillanz.

DH ist ein Maß für die Farbtonverschiebung und wird farbmetrisch ermittelt. Ein Wert kleiner Null zeigt in die gewünschte Richtung einer Rotverschiebung der Gelbkomponente.

Analog zu Beispiel 1 wurde die Nickelchloridlösung durch eine Mischlösung aus Nickelchlorid und Cerchlorid ersetzt.

| | |
|---|---|
| Beispiel 2a | 1 Mol Ni ersetzt durch 0,998 Mol Ni + 0,002 Mol Ce |
| Beispiel 2b | 1 Mol Ni ersetzt durch 0,995 Mol Ni + 0,005 Mol Ce |
| Beispiel 2c | 1 Mol Ni ersetzt durch 0,99 Mol Ni + 0,01 Mol Ce |
| Beispiel 2d | 1 Mol Ni ersetzt durch 0,98 Mol Ni + 0,02 Mol Ce |
| Beispiel 2e | 1 Mol Ni ersetzt durch 0,96 Mol Ni + 0,04 Mol Ce |
| Beispiel 2f | 1 Mol Ni ersetzt durch 0,92 Mol Ni + 0,08 Mol Ce |
| Beispiel 2g | 1 Mol Ni ersetzt durch 0,84 Mol Ni + 0,16 Mol Ce |

| Beispiel | BET* | Binder Farbstärke | Binder DC | Binder DH |
|---|---|---|---|---|
| 2 | 110 | 100% | 0 | 0 |
| 2a | 108 | 101% | 0,0 | -0,1 |
| 2b | 110 | 101% | 0,1 | -0,2 |
| 2c | 109 | 101% | 0,2 | -0,2 |
| 2d | 110 | 101% | 0,5 | -0,3 |
| 2e | 108 | 101% | 0,9 | -0,5 |
| 2f | 105 | 102% | 1,2 | -0,5 |
| 2g | 101 | 101% | -1,4 | -1,5 |

| | | | | |
|---|---|---|---|---|
| * siehe Tabelle 1 | | | | |

Analog Beispiel 1 wurde die Nickelchloridlösung durch eine Mischlösung aus Nickelchlorid und Kobaltchlorid ersetzt.

| | |
|---|---|
| Beispiel 3a | 1 Mol Ni ersetzt durch 0,998 Mol Ni + 0,002 Mol Co |
| Beispiel 3b | 1 Mol Ni ersetzt durch 0,995 Mol Ni + 0,005 Mol Co |
| Beispiel 3c | 1 Mol Ni ersetzt durch 0,99 Mol Ni + 0,01 Mol Co |
| Beispiel 3d | 1 Mol Ni ersetzt durch 0,98 Mol Ni + 0,02 Mol Co |
| Beispiel 3e | 1 Mol Ni ersetzt durch 0,96 Mol Ni + 0,04 Mol Co |
| Beispiel 3f | 1 Mol Ni ersetzt durch 0,92 Mol Ni + 0,08 Mol Co |

| Beispiel | BET | Binder Farbstärke | Binder DC | Binder DH |
|---|---|---|---|---|
| 3 | 110 | 100% | 0 | 0 |
| 3a | 107 | 101% | 0,3 | 0,1 |
| 3b | 108 | 100% | 0,5 | 0,0 |
| 3c | 110 | 101% | 0,7 | 0,1 |
| 3d | 109 | 101% | 0,9 | 0,1 |
| 3e | 110 | 101 % | 0,2 | -0,1 |
| 3f | 111 | 103% | -0,1 | -0,3 |

### Biespiel 4

1 Mol Diazobarbitursäure werden in 5 Liter 90°C-heißem Wasser mit 1 Mol Barbitursäure unter KOH-Titration bei pH 5 umgesetzt. Der pH wird mit Salzsäure auf 5 gestellt. 1 Mol einer 40%igen Nickelchloridlösung werden zugetropft. 2 Mol Melamin werden innerhalb 1h zugegeben. Nach 1h bei 90°C wird mit KOH auf pH 5 gestellt. Danach wird mit Salzsäure auf pH 1,5 gestellt und 3h bei 98°C getempert. Danach wird mit KOH auf pH 5 gestellt. Anschließend wird das Pigment auf einer Saugnutsche isoliert, gewaschen und bei 80°C im Vakuumtrockenschrank getrocknet und in einer üblichen Labormühle ca. 2 Minuten gemahlen.

In den nachfolgenden Beispielen wird die äquimolare Nickelchloridlösung (1 Mol) durch Nickelchloridlösung im Unterschuss (0,997 bzw. 0,99 bzw. 0,98 Mol) ersetzt. Als Basen werden KOH bzw. NaOH eingesetzt.

| | |
|---|---|
| Beispiel 4a | KOH, 0,997 Mol Ni |
| Beispiel 4b | KOH, 0,99 Mol Ni |
| Beispiel 4c | KOH, 0,98 Mol Ni |
| Beispiel 4d | NaOH, 0,98 Mol Ni |

Die so erhaltenen Pigmentpulver werden in eine wässrige Binderformulierung eingearbeitet.

| Beispiel | BET | BinderFarbstärke | Binder DC | Binder DH |
|---|---|---|---|---|
| 4 | 102 | 100% | 0 | 0 |
| 4a | 102 | 100% | 0,1 | -0,3 |
| 4b | 101 | 101% | 0,7 | -0,4 |
| 4c | 99 | 100% | 0,2 | -0,6 |
| 4d | 102 | 100% | 0,7 | 0,1 |

### Beispiel 5

1 Mol Diazobarbitursäure werden in 5 Liter 90°C-heißem Wasser mit 1 Mol Barbitursäure unter KOH-Titration bei pH 5 umgesetzt. Der pH wird mit Salzsäure auf 5 gestellt. 1 Mol einer 20%igen Kobaltchloridlösung werden zugetropft. 2 Mol Melamin werden innerhalb 1h zugegeben. Nach 1h bei 90°C wird mit KOH auf pH 5 gestellt. Danach wird das Pigment auf einer Saugnutsche isoliert, gewaschen und bei 80°C im Vakuumtrockenschrank getrocknet und in einer üblichen Labormühle ca. 2 Minuten gemahlen.

In den nachfolgenden erfindungsgemäßen Beispielen wird die äquimolare Kobaltchloridlösung (1 Mol) durch Kobaltchloridlösung im Unterschuss (0,99 bzw. 0,98 Mol) ersetzt. Als Basen werden KOH bzw. NaOH eingesetzt.

| | |
|---|---|
| Beispiel 5a | KOH, 0,99 Mol Co |
| Beispiel 5b | KOH, 0,98 Mol Co |
| Beispiel 5c | NaOH, 0,98 Mol Co |

Die so erhaltenen Pigmentpulver werden in eine wässrige Binderformulierung eingearbeitet.

Die Nullversuche haben definitionsgemäß die Farbstärke 100 %. DC und DH sind definitionsgemäß 0.

| Beispiel | BET | Binder Farbstärke | Binder DC | Binder DH |
|---|---|---|---|---|
| 5 | 37 | 100% | 0 | 0 |
| 5a | 35 | 101% | 0,6 | -0,1 |
| 5b | 42 | 101% | 2,0 | 0,5 |
| 5c | 44 | 99% | 3,5 | 0,5 |

Die in den vorgenannten Beispielen erhaltenen Pigmentmischungen können, wie in den Anwendungsbeispielen von EP-A 1 146 087 beschrieben, zur Herstellung eines Photolackes und zur Anwendung im LCD-Bereich eingesetzt werden.

### Beispiel 6

1 Mol Diazobarbitursäure werden in 5 Liter 90°C-heißem Wasser mit 1 Mol Barbitursäure unter KOH-Titration bei pH 5 umgesetzt. 2 Mol Melamin werden zugegeben. Der pH wird mit Salzsäure auf 5 gestellt. 1 Mol einer 40%igen Nickelchloridlösung werden zugetropft. Nach 1h bei 90°C wird mit KOH auf pH 5 gestellt. Danach wird mit Salzsäure auf pH 1,5 gestellt und 3h bei 98°C getempert. Danach wird mit KOH auf pH 5 gestellt. Anschließend wird das Pigment auf einer Saugnutsche isoliert, gewaschen und bei 80°C im Vakuumtrockenschrank getrocknet und in einer üblichen Labormühle ca. 2 Minuten gemahlen.

In den nachfolgenden erfindungsgemäßen Beispielen wird die Nickelchloridlösung durch eine Mischlösung aus Nickelchlorid und Kupferchlorid ersetzt.

| | |
|---|---|
| Beispiel 6a | 1 Mol Ni ersetzt durch 0,99 Mol Ni + 0,01 Mol Cu |
| Beispiel 6b | 1 Mol Ni ersetzt durch 0,96 Mol Ni + 0,04 Mol Cu |
| Beispiel 6c | 1 Mol Ni ersetzt durch 0,92 Mol Ni + 0,08 Mol Cu |

Jeweils 2g der zu prüfenden Pigmentpräparation und 2g P.G. 36 wurden mit 396 g einer kommerziellen Weißpaste, beispielsweise Ready Nova 70 der Firma Nordsjö (Akzo Nobel) und 400 ml Glasperlen vom Durchmesser 2 mm in einer Süßmeier Perlmühle unter Kühlen 30 min gemahlen. Die Pasten wurden mit einer Spiralrakel (25 µm) auf Rakelpapier aufgetragen und farbmetrisch mit dem Farbmessgerät Color Guide 450 der Firma Gardner vermessen.

Die Nullversuche haben definitionsgemäß die Farbstärke 100 %. DC und DH der Nullversuche sind definitionsgemäß 0.

| Beispiel | Binder Farbstärke | Binder DC | Binder DH |
|---|---|---|---|
| 6 | 100% | 0 | 0 |
| 6a | 100% | 1,5 | -0,2 |
| 6b | 101% | 1,5 | -0,4 |
| 6c | 100% | 0,4 | -0,6 |

## Patentansprüche

1. Pigmentpräparation enthaltend
a) wenigstens einen Metallkomplex einer Azo-Verbindung, die in Form ihrer tautomeren Strukturen der Formel (I) entspricht 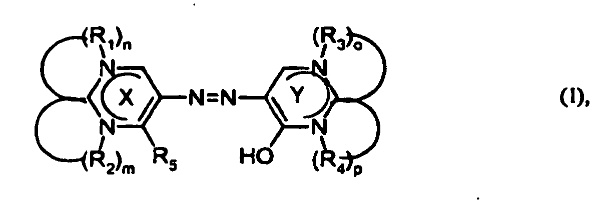 worin die mit
X und Y bezeichneten Ringe unabhängig voneinander je einen oder zwei Substituenten aus der Reihe =O, =S, =NR₇, -NR₆R₇, -OR₆, -SR₆, -COOR₆, -CN, -CONR₆R₇, -SO₂R₈, 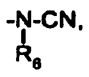 Alkyl, Cycloalkyl, Aryl und Aralkyl tragen können, wobei die Summe der endo- und exocyclischen Doppelbindungen für jeden der Ringe X und Y drei ist,
R₆ für Wasserstoff, Alkyl, Cycloalkyl, Aryl oder Aralkyl und
R₇ für Wasserstoff, Cyan, Alkyl, Cycloalkyl, Aryl, Aralkyl oder Acyl stehen und
R₈ Alkyl, Cycloalkyl, Aryl oder Aralkyl bezeichnet,
R₁, R₂, R₃, R₄ unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,
R₅ -OH, -NR₆R₇, Alkyl, Cycloalkyl, Aryl oder Aralkyl bedeutet, wobei die für R₁ bis R₈ genannten CH-Bindungen enthaltenden Substituenten ihrerseits substituiert sein können und m, n, o, p l oder für den Fall, dass von den Ring-Stickstoffatomen Doppelbindungen ausgehen, wie in Formel (I) durch die punktierten Linien angedeutet wird, auch Null bedeuten können,
und der wenigstens eine andere Verbindung eingelagert enthält, wobei das Metall des Metallkomplexes der Komponente a) Ni ist,
b) gegebenenfalls eine Eisenverbindung, die von der Komponente a) verschieden ist und deren Eisengehalt weniger als 30 ppm, bezogen auf die Komponente a) und
c) wenigstens eine Metallverbindung, deren Metall jeweils von dem der Metallverbindungen der Komponenten a) und b) verschieden ist und deren Metallgehalt 10 bis 10.000 ppm, bezogen auf die Komponente a) beträgt, wobei das Metall ausgewählt ist aus der Gruppe der Alkalimetalle wie Li, Na und K, der Erdalkalimetalle wie Mg, Ca und Ba, der Lanthanoiden wie La, Ce, Pr und Nd sowie Al, Sc, Ti, V, Cr, Mn, Co, Cu, und Zn.

2. Pigmentpräparation gemäß Anspruch 1, **dadurch gekennzeichnet, dass** sie das Metall der Metallverbindung der Komponente c) in einer Menge von 50 bis 5000 ppm, bezogen auf die Komponente a), enthält.

3. Pigmentpräparation gemäß Anspruch 1, **dadurch gekennzeichnet, dass** sie das Metall der Metallverbindung der Komponente c) in einer Menge von 200 bis 2500 ppm, bezogen auf die Komponente a), enthält.

4. Pigmentpräparationen gemäß Anspruch 1, **dadurch gekennzeichnet, dass** sie das Metall der Metallverbindung der Komponente c) in einer Menge von 200 bis 1000 ppm, bezogen auf die Komponente a), enthält.

5. Pigmentpräparation gemäß Anspruch 1, **dadurch gekennzeichnet, dass** das Metall der Komponente c) als Metallkomplex einer Azoverbindung der Formel (I) vorliegt.

6. Pigmentpräparationen gemäß wenigstens einem der Ansprüche 1 bis 5, **dadurch gekennzeichnet, dass** in der Verbindung der Formel (I) der mit X gekennzeichnete Ring für einen Ring der Formel 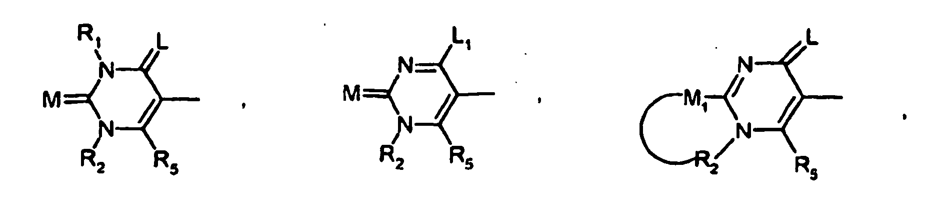 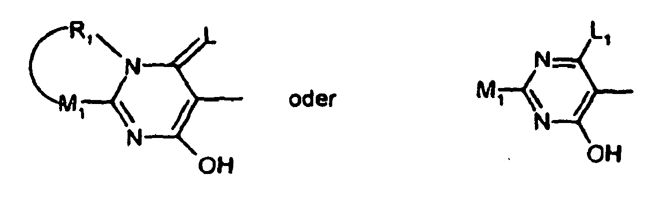 steht,
in denen
L und M unabhängig voneinander für =O, =S oder =NR₆ stehen
L₁ Wasserstoff, -OR₆, -SR₆, -NR₆R₇, -COOR₆, -CONR₆R₇, -CN, Alkyl, Cycloalkyl, Aryl oder Aralkyl und
M₁ -OR₆, -SR₆, -NR₆R₇, -COOR₆, -CONR₆R₇, -CN, -SO₂R₈, 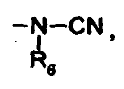 Alkyl, Cycloalkyl, Aryl oder Aralkyl bezeichnen, wobei die Substituenten M₁ und R₁ oder M₁ und R₂ einen 5- oder 6-gliedrigen Ring ausbilden können, und
R₁, R₂ und R₅ die oben angegebenen Bedeutungen besitzen.

7. Pigmentpräparation gemäß wenigstens einem der Ansprüche 1 bis 6, **dadurch gekennzeichnet, dass** die Azoverbindung der Formel (I) in Form ihrer freien Säure der Formel (II) oder (III) oder einer ihrer tautomeren Formeln entspricht 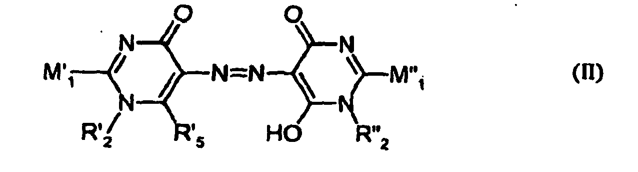 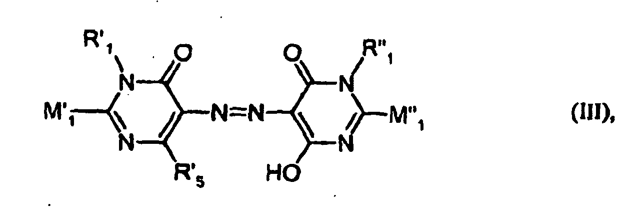 in denen
R'₅ -OH oder -NH₂ bezeichnet,
R'₁, R"₁, R'₂ und R"₂ jeweils für Wasserstoff steht und
M'₁ und M"₁ unabhängig voneinander für Wasserstoff, -OH, -NH₂, -NHCN, Arylamino oder Acylamino stehen.

8. Pigmentpräparationen gemäß wenigstens einem der Ansprüche 1 bis 7, **dadurch gekennzeichnet, dass** die Azoverbindung der Formel (I) der Formel (V) oder einer tautomeren Form davon entspricht

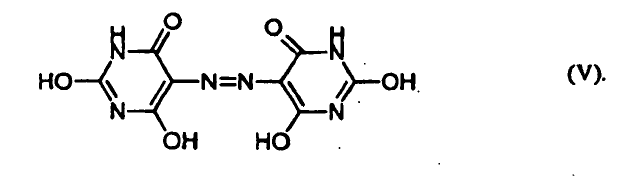

9. Pigmentpräparationen gemäß wenigstens einem der Ansprüche 1 bis 8, **dadurch gekennzeichnet, dass** der Metallkomplex der Komponente a) eine cyclische oder acyclisch organische Verbindung eingelagert enthält.

10. Pigmentpräparation gemäß wenigstens einem der Ansprüche 1 bis 9, **dadurch gekennzeichnet, dass** der Metallkomplex der Komponente a) Melamin eingelagert enthält.

11. Pigmentpräparationen gemäß wenigstens einem der Ansprüche 1 bis 10, **dadurch gekennzeichnet, dass** das Metall der Metallverbindung der Komponente c) wenigstens ein Metall aus der Gruppe Li, Na, K, Ca, Ba, Al, Mn, Co, Cu, Zn, La und Ce ist.

12. Pigmentpräparation gemäß wenigstens einem der Ansprüche 1 bis 11, **dadurch gekennzeichnet, dass** das Metall der Metallverbindung der Komponente c) wenigstens ein Metall aus der Gruppe Na, K, Co und Cu ist.

13. Pigmentpräparationen gemäß wenigstens einem der Ansprüche 1 bis 12, **dadurch gekennzeichnet, dass** das Metall der Metallverbindung der Komponente c) Co oder Cu ist.

14. Pigmentpräparation gemäß wenigstens einem der Ansprüche 1 bis 13, **dadurch gekennzeichnet, dass** sie ferner wenigstens ein Dispergiermittel enthält.

15. Pigmentpräparation gemäß wenigstens einem der Ansprüche 1 bis 14, **dadurch gekennzeichnet, dass** sie C.I. Pigment Green 36 enthalten.

16. Pigmentpräparation nach wenigstens einem der Ansprüche 1 bis 15, **dadurch gekennzeichnet, dass** sie ferner als Komponente d) wenigstens eine organische Verbindung ausgewählt aus der Gruppe der Terpene, Terpenoide, Fettsäureester und der Gruppe der Homo- oder Copolymere, wie statistische- oder Block-Copolymere, mit einer Löslichkeit in Wasser bei 20°C von weniger als I g/l enthalten.

17. Verfahren zur Herstellung von Pigmentpräparationen gemäß wenigstens einem der Ansprüche 1 bis 16, **dadurch gekennzeichnet, dass** die Azoverbindung der Formel (I) mit einem Metallsalz a) gegebenenfalls in Gegenwart eines Eisensalzes b), dessen Fe-Gehalt weniger als 30 ppm, bezogen auf die Komponente a) beträgt und in Gegenwart eines von a) und b) verschiedenen Metallsalzes c), dessen Metallgehalt 10 bis 10.000 ppm bezogen auf die Komponente a) beträgt komplexiert wird und eine einzulagernden Verbindung vor, während oder nach der Komplexbildung zugesetzt wird.

18. Verfahren zur Herstellung von Präparationen nach wenigstens einem der Ansprüche 1 bis 16, **dadurch gekennzeichnet, dass** man einen Metallkomplex einer Azoverbindung der Formel (I), der eine weitere Verbindung eingelagert enthält (Komponente a)) gegebenenfalls mit einer Fe-Verbindung (Komponente b)), dessen Fe-Gehalt weniger als 30 ppm, bezogen auf die Komponente a) beträgt und mit wenigstens einer Metallverbindung, deren Metallgehalt 10 bis 10.000 ppm, bezogen auf die Komponente a) beträgt und dessen Metall von dem des Metallkomplexes der Komponenten a) und b) verschieden ist, und gegebenenfalls weiteren Zusätzen mischt.

19. Verwendung der Pigmentpräparationen gemäß wenigstens einem der Ansprüche 1 bis 16 zur Herstellung von Ink Jet Tinten, Farbfiltern für Flüssigkristallanzeigen, Druckfarben, Leimfarben oder Binderfarben, für die Massefärbung von synthetischen, halbsynthetischen oder natürlichen makromolekularen Stoffen sowie für die Spinnfärbung von natürlichen, regenerierten oder künstlichen Fasern sowie zum Bedrucken von Textilien und Papier.

20. Farbfilter enthaltend wenigstens eine Pigmentpräparation gemäß wenigstens einem der Ansprüche 1 bis 16.

21. Verwendung von Pigmentpräparationen gemäß wenigstens einem der Ansprüche 1 bis 16 zur Herstellung von Farbfiltern für Flüssigkristallanzeigen.

22. Photolack, enthaltend wenigstens ein photohärtbares Monomer, wenigstens einen Photoinitiator und wenigstens eine Pigmentpräparation gemäß einem der Ansprüche 1 bis 16.

23. Verfahren zur Herstellung von Farbfiltern für Flüssigkristallanzeigen, **dadurch gekennzeichnet, dass** wenigstens eine Pigmentpräparation gemäß wenigstens einem der Ansprüche 1 bis 16, in einem organischen Lösungsmittel gegebenenfalls unter Zusatz eines Bindemittelharzes und/oder Dispergiermittels gemahlen wird, anschließend unter Zusatz von photohärtbaren Monomeren, Photoreaktionsstarter und gegebenenfalls weiterem Bindemittel und/oder Lösungsmittel zu einem Photolack verarbeitet wird, der im Anschluss daran mittels geeigneter Beschichtungsverfahren auf ein geeignetes Substrat, im Allgemeinen Glasplatte aufgetragen wird, mittels Photomaske belichtet und anschließend gehärtet und zum fertigen farbigen Farbfilter entwickelt wird.

24. Flüssigkristallanzeige, enthaltend wenigstens einen Farbfilter gemäß Anspruch 20.

25. Verwendung von Pigmentpräparationen gemäß wenigstens einem der Ansprüche 1 bis 16, in Drucktinten zur Herstellung von Farbfiltern nach dem Verfahren der Photolithographie, Offset-Druck oder dem Verfahren des mechanischen, piezzo-mechanischen oder thermischen Ink Jet Drucks.

26. Verwendung gemäß Anspruch 25, **dadurch gekennzeichnet, dass** die Drucktinten zusätzlich ein wässrig-organisches Trägermedium enthalten.

## Claims

1. Pigment formulation comprising
a) at least one metal complex of an azo compound which in the form of its tautomeric structures conforms to the formula (I) 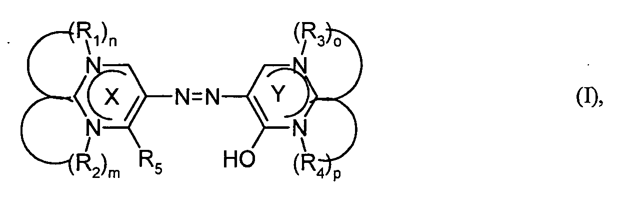 where the
X and Y rings may independently bear one or two substituents selected from the group consisting of =O, =S, =NR₇, -NR₆R₇, -OR₆, -SR₆, -COOR₆, -CN, -CONR₆R₇, -SO₂R₈, 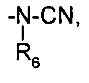 alkyl, cycloalkyl, aryl and aralkyl wherein the sum total of the endo- and exocyclic double bonds is three for each of the rings X and Y,
R₆ represents hydrogen, alkyl, cycloalkyl, aryl or aralkyl,
R₇ represents hydrogen, cyano, alkyl, cycloalkyl, aryl, aralkyl or acyl,
R₈ represents alkyl, cycloalkyl, aryl or aralkyl,
R₁, R₂, R₃, R₄ independently represent hydrogen, alkyl, cycloalkyl, aryl or aralkyl and, as indicated by the broken lines in the formula (I), may combine to form 5- or 6-membered rings to which further rings may be fused,
R₅ represents -OH, -NR₆R₇, alkyl, cycloalkyl, aryl or aralkyl, wherein the R₁ to R₈ substituents that contain CH bonds may in turn be substituted and m, n, o, p denote 1 or else, in the event that, as indicated by the dotted lines in the formula (I), double bonds emanate from the ring-nitrogen atoms, may also denote zero,
and which metal complex intercalates at least one other compound, the metal of the metal complex of component a) being Ni,
b) if appropriate an iron compound which is other than component a) and whose iron content is less than 30 ppm, based on component a), and
c) at least one metal compound whose metal is in each case other than that of the metal compounds of components a) and b) and whose metal content is 10 to 10 000 ppm, based on component a), the metal being selected from the group of alkali metals such as Li, Na and K, alkaline earth metals such as Mg, Ca and Ba, lanthanoids such as La, Ce, Pr and Nd and also Al, Sc, Ti, V, Cr, Mn, Co, Cu, and Zn.

2. Pigment formulation according to Claim 1, **characterized in that** it includes the metal of the metal compound of component c) in an amount of 50 to 5000 ppm, based on component a).

3. Pigment formulation according to Claim 1, **characterized in that** it includes the metal of the metal compound of component c) in an amount of 200 to 2500 ppm, based on component a).

4. Pigment formulation according to Claim 1, **characterized in that** it includes the metal of the metal compound of component c) in an amount of 200 to 1000 ppm, based on component a).

5. Pigment formulation according to Claim 1, **characterized in that** the metal of component c) is present as a metal complex of an azo compound of the formula (I).

6. Pigment formulations according to at least one of Claims 1 to 5, **characterized in that** ring X in the compound of the formula (I) represents a ring of the formula 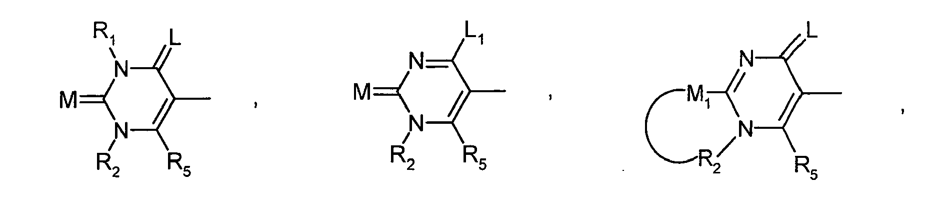 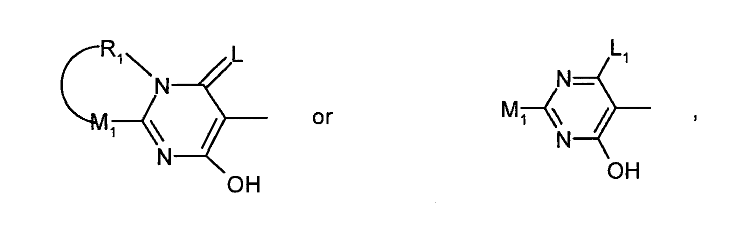 in each of which
L and M independently represent =O, =S or =NR₆
L₁ represents hydrogen, -OR₆, -SR₆, -NR₆R₇, -COOR₆, -CONR₆R₇, -CN, alkyl, cycloalkyl, aryl or aralkyl and
M₁ represents -OR₆, -SR₆, -NR₆R₇, -COOR₆, -CONR₆R₇, -CN, -SO₂R₈, 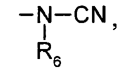 alkyl, cycloalkyl, aryl or aralkyl, wherein the substituents M₁ and R₁ or M₁ and R₂ may combine to form a 5- or 6-membered ring, and
R_{1,} R₂ and R₅ are each as defined above.

7. Pigment formulation according to at least one of Claims 1 to 6, **characterized in that** the azo compound of the formula (I) conforms in the form of its free acid to the formula (II) or (III) or to one of its tautomeric formulae 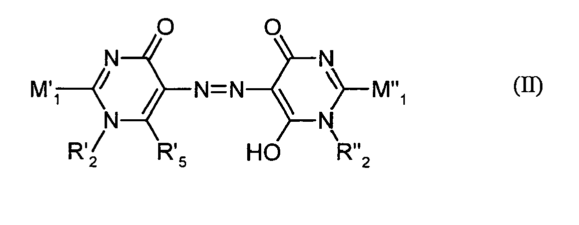 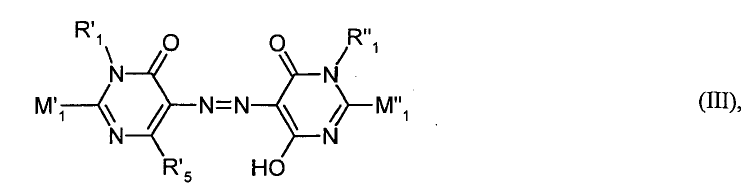 in each of which
R'₅ represents -OH or -NH₂,
R'₁, R"₁, R'₂ and R"₂ each represent hydrogen and
M'₁ and M"₁ independently represent hydrogen, -OH, -NH₂, -NHCN, arylamino or acylamino.

8. Pigment formulations according to at least one of Claims 1 to 7, **characterized in that** the azo compound of the formula (I) conforms to the formula (V) or to a tautomeric form thereof

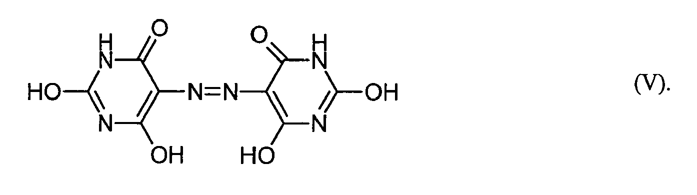

9. Pigment formulations according to at least one of Claims 1 to 8, **characterized in that** the metal complex of component a) intercalates a cyclic or acyclically organic compound.

10. Pigment formulation according to at least one of Claims 1 to 9, **characterized in that** the metal complex of component a) intercalates melamine.

11. Pigment formulations according to at least one of Claims 1 to 10, **characterized in that** the metal of the metal compound of component c) is at least one metal from the group consisting of Li, Na, K, Ca, Ba, Al, Mn, Co, Cu, Zn, La and Ce.

12. Pigment formulation according to at least one of Claims 1 to 11, **characterized in that** the metal of the metal compound of component c) is at least one metal from the group consisting of Na, K, Co and Cu.

13. Pigment formulations according to at least one of Claims 1 to 12, **characterized in that** the metal of the metal compound of component c) is Co or Cu.

14. Pigment formulation according to at least one of Claims 1 to 13, **characterized in that** it further comprises at least one dispersant.

15. Pigment formulation according to at least one of Claims 1 to 14, **characterized in that** they comprise C.I. Pigment Green 36.

16. Pigment formulation according to at least one of Claims 1 to 15, **characterized in that** it further comprises a component d) comprising at least one organic compound selected from the group of terpenes, terpenoids, fatty acid esters and the group of homo- or copolymers, such as random or block copolymers, having a solubility of less than 1 g/l in water at 20°C.

17. Process for producing pigment formulations according to at least one of Claims 1 to 16, **characterized in that** the azo compound of the formula (I) is complexed with a metal salt a) if appropriate in the presence of an iron salt b) whose Fe content is less than 30 ppm, based on component a) and in the presence of a metal salt c) which is other than a) and b) and whose metal content is 10 to 10 000 ppm based on component a) and a compound to be intercalated is added before, during or after the complexing.

18. Process for producing formulations according to at least one of Claims 1 to 16, **characterized in that** a metal complex of an azo compound of the formula (I), said metal complex intercalating a further compound (component a)) is mixed if appropriate with an Fe compound (component b)) whose Fe content is less than 30 ppm, based on component a), and with at least one metal compound whose metal content is 10 to 10 000 ppm, based on component a), and whose metal is other than the metal of the metal complex of components a) and b), and if appropriate further additives.

19. Use of the pigment formulations according to at least one of Claims 1 to 16 in the manufacture of ink jet inks, colour filters for liquid crystal displays, printing inks which are not ink jettable, distemper colours or binder colours, for the mass colouration of synthetic, semisynthetic or natural macromolecule materials and also for the spin-dyeing of natural, regenerated or artificial fibres and also for printing textiles and paper.

20. Colour filter comprising at least one pigment formulation according to at least one of Claims 1 to 16.

21. Use of pigment formulations according to at least one of Claims 1 to 16 in the manufacture of colour filters for liquid crystal displays.

22. Photoresist comprising at least one photocurable monomer, at least one photoinitiator and at least one pigment formulation according to any of Claims 1 to 16.

23. Process for producing colour filters for liquid crystal displays, **characterized in that** at least one pigment formulation according to at least one of Claims 1 to 16 is ground in an organic solvent if appropriate in the presence of a binder resin and/or dispersant and subsequently processed in the presence of photocurable monomers, photoreaction initiator and if appropriate further binder and/or solvent to form a photoresist which is thereafter applied by a suitable coating method onto a suitable substrate, generally a glass plate, irradiated using a photomask and then cured and developed to form the ready-produced coloured colour filter.

24. Liquid crystal display comprising at least one colour filter according to Claim 20.

25. Use of pigment formulations according to at least one of Claims 1 to 16 in printing inks for producing colour filters by photolithography, offset printing or mechanical, piezomechanical or thermal ink jet printing.

26. Use according to Claim 25, **characterized in that** the printing inks further comprise an aqueous organic vehicle medium.

## Revendications

1. Préparation de pigment contenant
a) au moins un complexe métallifère d'un composé azo qui, sous forme de ses structures tautomères, correspond à la formule (I) 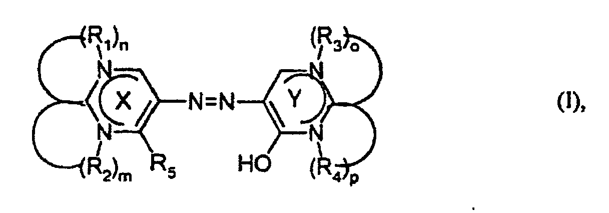 dans laquelle
les cycles désignés par X et Y peuvent porter chacun, indépendamment l'un de l'autre, un ou deux substituants choisis dans la série =O, =S, =NR₇, -NR₆R₇, -OR₆, -SR₆, -COOR₆, -CN, -CONR₆R₇, -SO₂R₈, 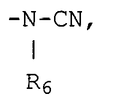 alkyle, cycloalkyle, aryle et aralkyle, la somme des doubles liaisons endo- et exocycliques pour chacun des cycles X et Y étant égale à trois,
R₆ représente un atome d'hydrogène, un groupe alkyle, cycloalkyle, aryle ou aralkyle et
R₇ représente un atome d'hydrogène, un groupe cyano, alkyle, cycloalkyle, aryle, aralkyle ou acyle et
R₈ représente un groupe alkyle, cycloalkyle, aryle ou aralkyle,
R₁, R₂, R₃, R₄ représentent, indépendamment les uns des autres, un atome d'hydrogène, un groupe alkyle, cycloalkyle, aryle ou aralkyle, et en outre, comme indiqué dans la formule (I) par les lignes interrompues, peuvent former des cycles à 5 ou 6 chaînons, auxquels peuvent être soudés les autres cycles,
R₅ représente -OH, -NR₆R₇, un groupe alkyle, cycloalkyle, aryle ou aralkyle, les substituants contenant des liaisons CH mentionnés pour R₁ à R₈ pouvant pour leur part être substitués et m, n, o, p pouvant représenter 1 ou, dans le cas où des doubles liaisons partent des atomes d'azote formant un cycle, comme indiqué par les traits interrompus dans la formule (I), également zéro,
et qui contient au moins un, autre composé incorporé, le métal du complexe métallifère du composant a) étant le nickel,
b) éventuellement un composé contenant du fer, qui est différent du composant a) et dont la teneur en fer est inférieure à 30 ppm, par rapport au composant a) et
c) au moins un composé métallique, dont le métal est chaque fois différent de celui des composés métalliques des composants a) et b) et dont la teneur en métal va de 10 à 10 000 ppm, par rapport au composant a), le métal étant choisi dans le groupe des métaux alcalins tels que Li, Na et K, des métaux alcalino-terreux tels que Mg, Ca et Ba, des lanthanides tels que La, Ce, Pr et Nd, ainsi que Al, Sc, Ti, V, Cr, Mn, Co, Cu et Zn.

2. Préparation de pigment selon la revendication 1, **caractérisée en ce qu'**elle contient le métal du composé métallique du composant c) en une quantité de 50 à 5 000 ppm, par rapport au composant a).

3. Préparation de pigment selon la revendication 1, **caractérisée en ce qu'**elle contient le métal du composé métallique du composant c) en une quantité de 200 à 2 500 ppm, par rapport au composant a).

4. Préparation de pigment selon la revendication 1, **caractérisée en ce qu'**elle contient le métal du composé métallique du composant c) en une quantité de 200 à 1 000 ppm, par rapport au composant a).

5. Préparation de pigment selon la revendication 1, **caractérisée en ce que** le métal du composant c) se trouve sous forme de complexe métallifère d'un composé azo de formule (I).

6. Préparations de pigments selon au moins l'une des revendications 1 à 5, **caractérisées en ce que** dans le composé de formule (I) le cycle désigné par X représente un cycle de formule 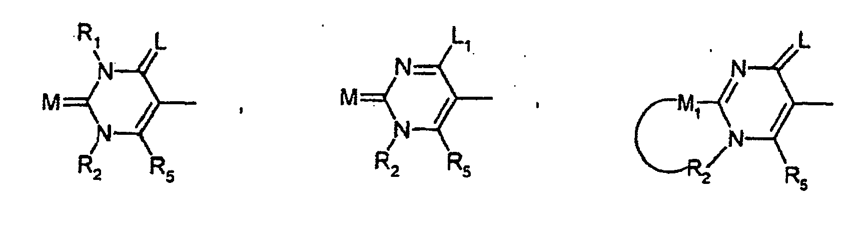 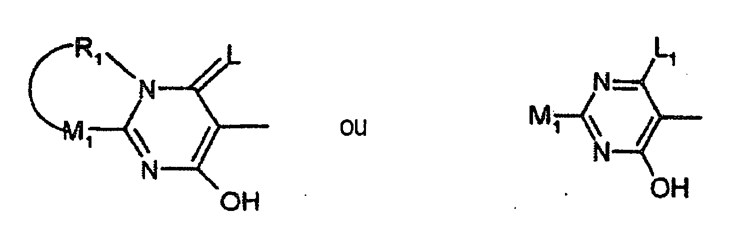 formules dans lesquelles
L et M représentent, indépendamment l'un de l'autre, =O, =S ou =NR₆
L₁ représente un atome d'hydrogène, -OR₆, -SR₆, -NR₆R₇, -COOR₆, -CONR₆R₇, -CN, un groupe alkyle, cycloalkyle, aryle ou aralkyle et
M₁ représente -OR₆, -SR₆, -NR₆R₇, -COOR₆, -CONR₆R₇, -CN, -SO₂R₈, 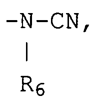 un groupe alkyle, cycloalkyle, aryle ou aralkyle, les substituants M₁ et R₁ ou M₁ et R₂ pouvant former un cycle à 5 ou 6 chaînons, et
R₁, R₂ et R₅ ont les significations indiquées plus haut.

7. Préparation de pigment selon au moins l'une des revendications 1 à 6, **caractérisée en ce que** le composé azo de formule (I) correspond, sous forme de son acide libre, à la formule (II) ou (III) ou à l'une de ses formes tautomères 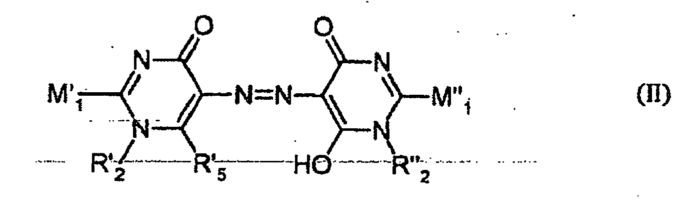 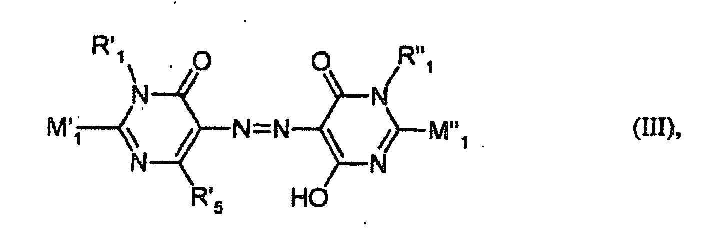 dans lesquelles
R'₅ représente -OH ou -NH₂,
R'₁, R"₁, R'₂ et R"₂ représentent chacun un atome d'hydrogène et
M'₁ et M"₁ représentent, indépendamment l'un de l'autre, un atome d'hydrogène, -OH, -NH₂, -NHCN, un groupe arylamino ou acylamino.

8. Préparations de pigments selon au moins l'une des revendications 1 à 7, **caractérisée en ce que** le composé azo de formule (I) correspond à la formule (V) ou à une forme tautomère de celle-ci

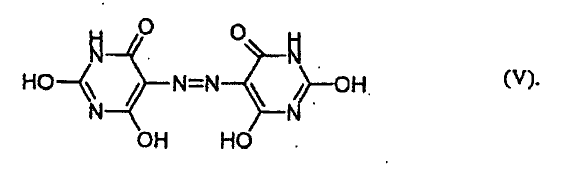

9. Préparation de pigment selon au moins l'une des revendications 1 à 8, **caractérisée en ce que** le complexe métallifère du composant a) contient incorporé un composé organique cyclique ou acyclique.

10. Préparation de pigment selon au moins l'une des revendications 1 à 9, **caractérisée en ce que** le complexe métallifère du composant a) contient incorporée de la mélamine.

11. Préparations de pigments selon au moins l'une des revendications 1 à 10, **caractérisées en ce que** le métal du composé métallique du composant c) est au moins un métal choisi dans le groupe constitué par Li, Na, K, Ca, Ba, Al, Mn, Co, Cu, Zn, La et Ce.

12. Préparation de pigment selon au moins l'une des revendications 1 à 11, **caractérisée en ce que** le métal du composé métallique du composant c) est au moins un métal choisi dans le groupe constitué par Na, K, Co et Cu.

13. Préparation de pigment selon au moins l'une des revendications 1 à 12, **caractérisée en ce que** le métal du composé métallique du composant c) est Co ou Cu.

14. Préparation de pigment selon au moins l'une des revendications 1 à 13, **caractérisée en ce qu'**elle contient en outre au moins un dispersant.

15. Préparation de pigment selon au moins l'une des revendications 1 à 14, **caractérisée en ce qu'**elle contient du pigment vert C.I. Pigment Green 36.

16. Préparation de pigment selon au moins l'une des revendications 1 à 15, **caractérisée en ce qu'**elle contient en outre en tant que composant d) au moins un composé organique choisi dans le groupe constitué par les terpènes, les terpénoïdes, les esters d'acides gras et le groupe des homopolymères ou copolymères, tels que des copolymères séquencés ou statistiques, ayant une solubilité dans l'eau à 20 °C de moins de 1 g/l.

17. Procédé pour la production de préparations de pigments selon au moins l'une des revendications 1 à 16, **caractérisé en ce que** le composé azo de formule (I) est complexé avec un sel métallique a) éventuellement en présence d'un sel de fer b), dont la teneur en Fe est inférieure à 30 ppm, par rapport au composant a), et en présence d'un sel métallique c) différent de a) et b), dont la teneur en métal va de 10 à 10 000 ppm, par rapport au composant a), et on ajoute un composé à incorporer, avant, pendant ou après la formation du complexe.

18. Procédé pour la production de préparations selon au moins l'une des revendications 1 à 16, **caractérisé en ce qu'**on mélange un complexe métallifère d'un composé azo de formule (I), qui contient incorporé un autre composé (composant a)) éventuellement avec un composé contenant du fer (composant b)), dont la teneur en Fe est inférieure à 30 ppm, par rapport au composant a), et avec au moins un composé métallique, dont le teneur en métal va de 10 à 10 000 ppm, par rapport au composant a), et dont le métal est différent de celui du complexe métallifère des composants a) et b), et éventuellement d'autres additifs.

19. Utilisation des préparations de pigments selon au moins l'une des revendications 1 à 16, pour la fabrication d'encres pour impression par jet d'encre, pour des affichages à cristaux liquides ou des encres d'imprimerie, des peintures à la colle, des peintures à base de dispersions, pour la coloration dans la masse de matières macromoléculaires synthétiques, semi-synthétiques ou naturelles ainsi que pour la teinture dans la masse de fibres naturelles, régénérées ou artificielles ainsi que pour l'impression de textiles et de papier.

20. Filtre coloré contenant au moins une préparation de pigment selon au moins l'une des revendications 1 à 16.

21. Utilisation des préparations de pigments selon au moins l'une des revendications 1 à 16, pour la fabrication de filtres colorés pour affichages à cristaux liquides.

22. Laque photosensible, contenant au moins un monomère photodurcissable, au moins un photoamorceur et au moins une préparation de pigment selon l'une quelconque des revendications 1 à 16.

23. Procédé pour la fabrication de filtres colorés pour affichages à cristaux liquides, **caractérisé en ce qu'**on broie au moins une préparation de pigment selon au moins l'une des revendications 1 à 16, dans un solvant organique éventuellement avec addition d'une résine en tant que liant et/ou d'un dispersant, ensuite on la transforme, avec addition de monomères photodurcissables, d'amorceurs de réaction photochimique et éventuellement d'un autre liant et/ou solvant, en une laque photosensible qui est ensuite appliquée, au moyen de procédés d'enduction appropriés, sur un support convenable, en général une plaque de verre, insolée au moyen d'un photomasque, et ensuite durcie et développée pour donner le filtre coloré final.

24. Affichage à cristaux liquides, contenant au moins un filtre coloré selon la revendication 20.

25. Utilisation de préparations de pigments selon au moins l'une des revendications 1 à 16, dans des encres d'imprimerie pour la fabrication de filtres colorés selon le procédé de la photolithographie, de l'impression offset ou le procédé de l'impression par jet d'encre mécanique, piézo-mécanique ou thermique.

26. Utilisation selon la revendication 25, **caractérisée en ce que** les encres d'imprimerie contiennent en outre un milieu de support aqueux-organique.
